(19) Europäisches Patentamt
European Patent Office
Office européen des brevets

(11) **EP 4 773 082 A1**

(12) **EUROPEAN PATENT APPLICATION**
published in accordance with Art. 153(4) EPC

(43) Date of publication:
**08.07.2026 Bulletin 2026/28**

(21) Application number: **24890305.6**

(22) Date of filing: **10.09.2024**

(51) International Patent Classification (IPC):
*G06T 11/10* (2026.01)        *G06T 11/60* (2026.01)

(52) Cooperative Patent Classification (CPC):
**G06T 11/10; G06T 11/60**

(86) International application number:
**PCT/CN2024/117932**

(87) International publication number:
**WO 2025/102946 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.11.2023  CN 202311524401**

(71) Applicant: **Tencent Technology (Shenzhen) Company Limited**
**Shenzhen, Guangdong 518057 (CN)**

(72) Inventors:
• **PENG, Xu**
**Shenzhen, Guangdong 518057 (CN)**
• **ZHU, Junwei**
**Shenzhen, Guangdong 518057 (CN)**

• **JIANG, Boyuan**
**Shenzhen, Guangdong 518057 (CN)**
• **TAI, Ying**
**Shenzhen, Guangdong 518057 (CN)**
• **LUO, Donghao**
**Shenzhen, Guangdong 518057 (CN)**
• **WANG, Chengjie**
**Shenzhen, Guangdong 518057 (CN)**
• **WU, Yunsheng**
**Shenzhen, Guangdong 518057 (CN)**
• **JI, Rongrong**
**Shenzhen, Guangdong 518057 (CN)**
• **JIN, Taisong**
**Shenzhen, Guangdong 518057 (CN)**

(74) Representative: **Reddie & Grose LLP**
**The White Chapel Building**
**10 Whitechapel High Street**
**London E1 8QS (GB)**

(54) **PICTURE PROCESSING METHOD AND APPARATUS, DEVICE, AND STORAGE MEDIUM**

(57)    The present application relates to the technical field of image processing, and discloses a picture processing method and apparatus, a device, and a storage medium. The method comprises: generating conditional embedding information on the basis of an original portrait picture and description text; on the basis of the original portrait picture, the conditional embedding information, and a facial mask map, generating a cross attention map corresponding to the original portrait picture; and on the basis of the conditional embedding information and the cross attention map, performing editing to obtain a processed portrait picture corresponding to the original portrait picture. The method can be applied to various scenarios such as cloud technology, artificial intelligence, intelligent transportation, and assisted driving. According to the method, a facial feature of a person in the original portrait picture and a person expression feature in the description text are fused, thereby ensuring a high similarity between the person in the generated processed portrait picture and the person in the original portrait picture and significantly improving the person fidelity in an editing process.

FIG. 2

**Description**

RELATED APPLICATION

This application claims priority to Chinese Patent Application No. 202311524401.2, filed with the China National Intellectual Property Administration on November 15, 2023 and entitled "PICTURE PROCESSING METHOD AND APPARATUS, DEVICE, AND STORAGE MEDIUM", which is incorporated by reference in its entirety.

FIELD OF THE TECHNOLOGY

Embodiments of this application relate to the technical field of image processing, and in particular, to a picture processing method and apparatus, a device, and a storage medium.

BACKGROUND OF THE DISCLOSURE

Currently, there is a requirement for editing an original portrait picture according to description text, that is, an environment, a facial expression, and the like in the original portrait picture are edited according to content of the description text.

In the related art, a generation model guided by description text is trained, and then an original portrait picture is edited using the trained generation model under the guidance of the description text, to generate a processed portrait picture.

When an original portrait picture is edited using the related art, only content of description text is considered during editing, leading to a low similarity between the person in the generated processed portrait picture and the person in the original portrait picture, that is, person distortion. The more complex the editing, the more severe the person distortion becomes.

SUMMARY

Embodiments of this application provide a picture processing method and apparatus, a device, and a storage medium. Technical solutions are as follows.

According to an aspect of the embodiments of this application, a picture processing method is provided, which is performed by a computer device, and includes:

generating conditional embedding information based on an original portrait picture and description text, the conditional embedding information including a feature of the original portrait picture and a feature of the description text; the original portrait picture being a picture containing a facial feature, and the description text being text configured for describing a facial expression feature;

generating a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression features in the facial region; and

obtaining, based on the conditional embedding information and the cross-attention map, a processed portrait picture corresponding to the original portrait picture, the processed portrait picture retaining the facial feature in the original portrait picture and containing the facial expression feature described by the description text.

According to an aspect of the embodiments of this application, a method for training a picture processing model is provided, which is performed by a computer device, and includes:

acquiring at least one training sample, each training sample including a sample portrait picture and sample description text that correspond to each other; the sample portrait picture being a picture containing a facial feature, and the sample description text being text configured for describing a facial expression feature in the sample portrait picture;

generating sample conditional embedding information through the picture processing model based on the sample portrait picture and the sample description text, the sample conditional embedding information including a feature of the sample portrait picture and a feature of the sample description text;

generating a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region;

obtaining, through the picture processing model based on the sample conditional embedding information and the cross-attention map, a processed sample portrait picture corresponding to the sample portrait picture; and

adjusting a parameter of the picture processing model based on the sample portrait picture and the processed sample portrait picture to obtain a trained picture processing model.

According to an aspect of the embodiments of this application, a picture processing apparatus is provided, which is deployed on a computer device, and includes:

an embedding module, configured to generate conditional embedding information based on an original portrait picture and description text, the conditional embedding information including a feature of the original portrait picture and a feature of the description text; the original portrait picture being a picture containing a facial feature, and the description text being text configured for describing a facial expression feature;

an attention module, configured to generate a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression feature in the facial region; and

an editing module, configured to obtain, based on the conditional embedding information and the cross-attention map, a processed portrait picture corresponding to the original portrait picture, the processed portrait picture retaining the facial feature in the original portrait picture and containing the facial expression feature described by the description text.

According to an aspect of the embodiments of this application, an apparatus for training a picture processing model is provided, which is deployed on a computer device, and includes:

a sample acquisition module, configured to acquire at least one training sample, each training sample including a sample portrait picture and sample description text that correspond to each other; the sample portrait picture being a picture containing a facial feature, and the sample description text being text configured for describing a facial expression feature in the sample portrait picture;

a sample embedding module, configured to generate sample conditional embedding information through the picture processing model based on the sample portrait picture and the sample description text, the sample conditional embedding information including a feature of the sample portrait picture and a feature of the sample description text;

a sample attention module, configured to generate a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than than the facial region, and the cross-attention map being configured for generating expression content corresponding to the facial expression feature in the facial region;

a sample editing module, configured to obtain, through the picture processing model based on the sample conditional embedding information and the cross-attention map, a processed sample portrait picture corresponding to the sample portrait picture; and

a model parameter adjustment module, configured to adjust a parameter of the picture processing model based on the sample portrait picture and the processed sample portrait picture to obtain a trained picture processing model.

According to an aspect of the embodiments of this application, a computer device is provided, including a processor and a memory, the memory having a computer program stored therein, and the computer program being loaded and executed by the processor to implement the foregoing picture processing method or the foregoing method for training a picture processing model.

According to an aspect of the embodiments of this application, a computer-readable storage medium is provided, having a computer program stored therein, the computer program being loaded and executed by a processor to implement the foregoing picture processing method or the foregoing method for training a picture processing model.

According to an aspect of the embodiments of this application, a computer program product is provided, including a computer program. The computer program is stored in a computer-readable storage medium. A processor of a computer device reads the computer program from the computer-readable storage medium and executes the computer instructions to cause the computer device to perform the foregoing picture processing method or the foregoing method for training a picture processing model.

The technical solutions provided in the embodiments of this application include at least the following beneficial effects.

The conditional embedding information is generated based on the original portrait picture and the description text. The original portrait picture is a picture including the facial feature, and the description text is text configured for describing the facial expression feature, so that the facial feature in the original portrait picture and the facial expression feature of the description text are fused in the conditional embedding information. Then, the cross-attention map corresponding to the original portrait picture is generated according to the conditional embedding information, the original portrait picture, and the facial mask map. The facial mask map is configured for distinguishing the facial region in the original portrait picture from other regions in the original portrait picture than the facial region, and the cross-attention map is configured for generating the expression content corresponding to the facial expression feature in the facial region. In this way, the processed portrait picture may be obtained through editing according to the conditional embedding information and the cross-attention map. Since the facial feature in the original portrait picture and the facial expression feature of the description text are fused in the conditional embedding information, when the cross-attention map instructs to generate the expression content corresponding to the facial expression feature in the facial region, the facial feature in the original portrait picture and the facial expression feature of the description text may be fused to edit the facial expression, thereby ensuring a high similarity between a person in the generated processed portrait picture and a person in the original portrait picture, and significantly improving the person fidelity in an editing process.

BRIEF DESCRIPTION OF THE DRAWINGS

FIG. 1 is a schematic diagram of a solution implementation environment according to an embodiment of this application.

FIG. 2 is a flowchart of a picture processing method according to an embodiment of this application.

FIG. 3 is a schematic diagram of a generation process of a cross-attention map according to an embodiment of this application.

FIG. 4 is a schematic diagram of cross-attention maps according to an embodiment of this application.

FIG. 5 is a flowchart of a method for training a picture processing model according to an embodiment of this application.

FIG. 6 is a flowchart of a training process of a picture processing model according to an embodiment of this application.

FIG. 7 is a comparison diagram of generated processed portrait pictures according to an embodiment of this application.

FIG. 8 is a comparison diagram of emotion editing according to an embodiment of this application.

FIG. 9 is a line chart showing the influence of a time step on identity preservation according to an embodiment of this application.

FIG. 10 is a bar chart showing the influence of a truncation hyperparameter on identity preservation and editing capability according to an embodiment of this application.

FIG. 11 is a schematic diagram of test results of a picture processing model according to an embodiment of this application.

FIG. 12 is a block diagram of a picture processing apparatus according to an embodiment of this application.

FIG. 13 is a block diagram of an apparatus for training a picture processing model according to an embodiment of this application.

FIG. 14 is a structural block diagram of a computer device according to an embodiment of this application.

DESCRIPTION OF EMBODIMENTS

To make the objectives, technical solutions, and advantages of this application clearer, implementations of this application will be described in further detail below with reference to the accompanying drawings.

In the embodiments of this application, pictures may be automatically processed through an artificial intelligence (AI) technology. With the research and progress of the AI technology, the AI technology has been researched and applied to a plurality of fields, such as common smart home, smart wearable devices, virtual assistants, smart speakers, intelligent marketing, unmanned driving, autonomous driving, unmanned aerial vehicles, digital twins, virtual humans, robots, artificial intelligence generated content (AIGC), conversational interaction, intelligent medical, intelligent customer service, and game AI. With the development of the technology, the AI technology will be applied to more fields, and plays an increasingly important role.

Solutions provided in the embodiments of this application relate to technologies such as computer vision and machine learning of AI, and are specifically described through the following embodiments.

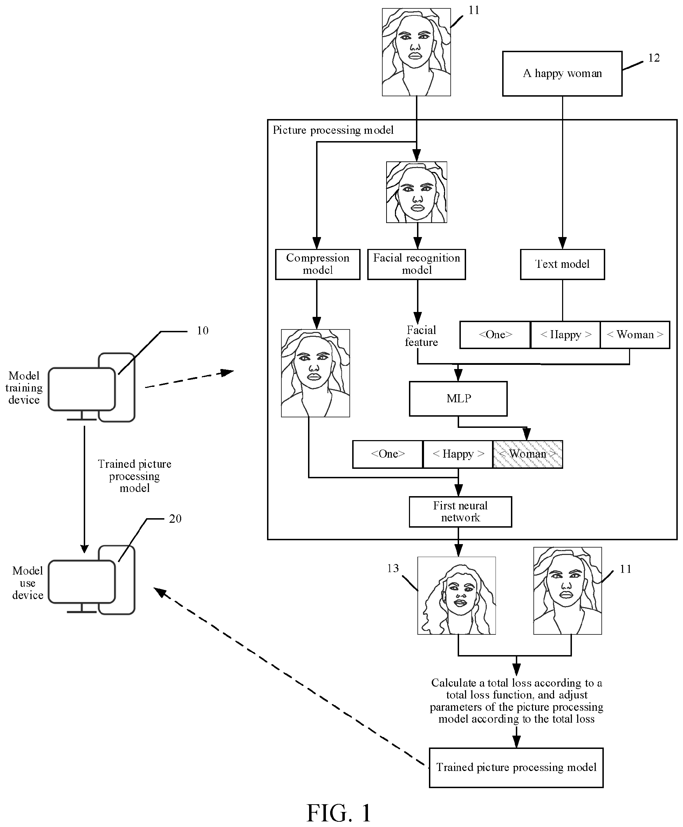

FIG. 1 is a schematic diagram of a solution implementation environment according to an embodiment of this application. The solution implementation environment may include a model training device 10 and a model use device 20.

The model training device 10 is an electronic device having data calculation, processing, and storage functions. The model training device 10 may be a terminal device or a server. The model training device 10 may include, but is not limited to, an electronic device such as a mobile phone, a computer, an intelligent voice interaction device, an intelligent appliance, an in-vehicle terminal, an aircraft, a game console, a wearable device, a multimedia playback device, an augmented reality (AR) device, or a virtual reality (VR) device. The model training device 10 is configured to train a picture processing model.

In the embodiments of this application, the picture processing model is a diffusion model. In some embodiments, the model training device 10 may train the picture processing model through machine learning so that the picture processing model has good performance. In some embodiments, a training process of the picture processing model is as follows (which is only briefly described herein, and a specific training process may refer to the following embodiments): acquiring a training sample for training, the training sample including a sample portrait picture 11 and sample description text 12; compressing the sample portrait picture 11 into a sample latent space picture through a compression model; extracting a facial feature in the sample portrait picture 11 through a facial recognition model; encoding, through a text model, the sample description text 12 to obtain text embedding information; concatenating the facial feature with embedding information corresponding to a first token to obtain updated embedding information; processing the updated embedding information through a multi-layer perceptron (MLP) to obtain final embedding information corresponding to the first token; replacing the final embedding information corresponding to the first token with the text embedding information to obtain conditional embedding information; generating a processed portrait picture 13 through a first neural network according to the sample latent space picture and the conditional embedding information; calculating a total loss according to the sample portrait picture 11 and the processed sample portrait picture 13; and adjusting a parameter of the picture processing model according to the total loss to obtain a trained picture processing model.

The model use device 20 is an electronic device having data calculation, processing, and storage functions. The model use device 20 may be a terminal device or a server. The model use device 20 may include, but is not limited to, an electronic device such as a mobile phone, a computer, an intelligent voice interaction device, an intelligent appliance, an in-vehicle terminal, an aircraft, a game console, a wearable device, a multimedia playback device, an AR device, a VR device, a cloud technology platform, an intelligent robot, an intelligent transportation terminal system, or a driving central control system. The model use device 20 generates a processed portrait picture using the trained picture processing model according to the original portrait picture and the description text.

The model training device 10 and the model use device 20 may be two independent devices, or may be the same device.

For example, the foregoing server may be an independent physical server, may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and AI platform, but is not limited thereto.

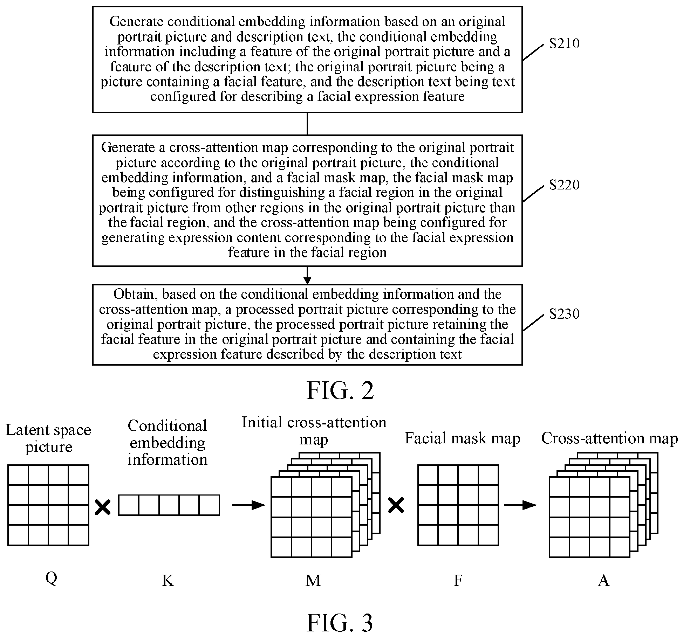

FIG. 2 is a flowchart of a picture processing method according to an embodiment of this application. An execution subject of operations of this method may be a computer device. For example, the computer device may be the model use device 20 in the solution implementation environment shown in FIG. 1. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. The method may include at least one of the following operations (210-230).

Operation 210: Generate conditional embedding information based on an original portrait picture and description text, the conditional embedding information including a feature of the original portrait picture and a feature of the description text; the original portrait picture being a picture containing a facial feature, and the description text being text configured for describing a facial expression feature.

The original portrait picture includes at least one person/human, and features of the person may be presented completely or partial in the original portrait picture. In the application, the facial feature represents the inherent, motion-invariant anatomical characteristics used to characterize an individual's identity, such as the geometric proportions, skeletal structure, and spatial distribution of facial organs, while facial expression feature represents the time-sensitive, non-rigid deformations driven by facial muscle movements used to characterize an individual's emotional state, such as local muscle displacements caused by smiling or anger. The original portrait picture is a picture including a plurality of pixels, and each pixel contains a part of information of the picture. The original portrait picture may adopt multiple formats and representations, including but not limited to, a joint photographic experts group (JPEG), portable network graphics (PNG), bitmap (BMP), a tagged image file format, a raw image format (RAW), and scalable vector graphics (SVG). Each pixel uses values to represent attributes such as brightness, a color, and a position on a picture. For example, in a color picture, colors are represented using three channels-red, green, and blue (RGB). The colors in the picture may be precisely specified and adjusted by controlling strength values of the three channels. In a black-white or grayscale picture, a single channel is adopted to represent the brightness or grayscale level. The resolution of a picture refers to the number of pixels of the picture in each direction. The higher the resolution, the clearer the picture.

The description text is text configured for guiding the generation of corresponding picture content containing the facial expression feature on the original portrait picture. In some embodiments, the description text is text configured for describing an environment feature and the facial expression feature. In this way, the description text is text configured for guiding the generation of corresponding picture content containing the environment feature and the facial expression feature on the original portrait picture. The environment feature originates from words with descriptions such as environmental description, and the facial expression feature originates from words with descriptions such as expression description and emotional description. For example, a text "a sad woman is under a tree" is description text. In the description text, "sad" is a word with emotional description, and "under a tree" is a word with environmental description. For example, in a text "there is a woman with a happy smile on the lawn", "on the lawn" is a word with environmental description, "happy" is a word with emotional description, and "smile" is a word with expression description.

The conditional embedding information is an embedding vector containing the feature of the original portrait picture and the feature of the description text, which represents a constraint on a picture generated by a picture processing model. The feature of the original portrait picture is extracted from the original portrait picture, is configured for representing quantitative representation of content of the original portrait picture, and may be represented through a feature map, a color histogram, a graphic data structure, a convolutional feature map, and the like. The feature of the description text is extracted from the description text, configured for representing quantitative representation of content of the description text, and may be represented using one of the following structured data: a sparse matrix, a sparse vector, a dense vector, and the like. The feature of the original portrait picture and the feature of the description text may use the same feature representation manner, or may use different feature representation manners. A specific feature representation manner used is determined by a person skilled in the art. This is not limited in this application.

In some embodiments, the facial feature contained in the original portrait picture is extracted through the facial recognition model. The description text is encoded through the text model to obtain the text embedding information. The conditional embedding information is generated based on the facial feature and the text embedding information.

The facial recognition model is a neural network model that may extract facial features from an original portrait picture. The neural network model may be a Tface model, or may be another neural network model configured to extract facial features. This is not limited in this application.

The text model is a deep learning model configured to convert text data into an embedding vector having a numerical representation. In this application, the embedding vector is alternatively referred to as text embedding information. The deep learning model may be a contrastive language-image pretraining (CLIP) text model, a recurrent neural network (RNN), or another text model. This is not limited in this application.

The text embedding information is an embedding vector that is converted from description text and has a numerical representation, and contains information such as description text features, word embedding, and sentence embedding.

In the foregoing manner, the facial feature and the text embedding information are integrated into the conditional embedding information. When personalized content is generated according to the embedding information of the first token, the influence on the facial feature in the original portrait picture is reduced, thereby facilitating subsequent work of retaining the facial feature.

In some embodiments, the description text includes at least one token, and the text embedding information includes embedding information respectively corresponding to the at least one token. In some embodiments, the conditional embedding information may be generated based on the facial feature and the text embedding information in the following manner: concatenating embedding information corresponding to a first token in the at least one token with the facial feature to obtain updated embedding information corresponding to the first token, the first token referring to a preset token configured for representing a person; processing the updated embedding information corresponding to the first token using an MLP to obtain final embedding information corresponding to the first token, the final embedding information corresponding to the first token and the embedding information corresponding to the first token having a same dimension; and replacing the embedding information corresponding to the first token in the text embedding information with the final embedding information corresponding to the first token to generate the conditional embedding information.

A token is a text segment representing a piece of semantic information, and may be a character, a word, or a phrase or a sentence including a plurality of words.

In some embodiments, one token corresponds to one piece of embedding information. For example, one description text has five tokens, corresponding conditional embedding information includes five pieces of embedding information, and the embedding information and the tokens are in a one-to-one correspondence.

In the embodiments of this application, the dimension may refer to the number of attributes of the embedding information. For example, the first token may describe its embedding information from 40 attributes, and a dimension of the embedding information corresponding to the first token is 40. The final embedding information corresponding to the first token and the embedding information corresponding to the first token have the same dimension. That is, the number of attributes of the final embedding information corresponding to the first token is the same as the number of attributes of the embedding information corresponding to the first token. The attributes of the embedding information may refer to various features or information of the token, such as semantic information, grammatical information, contextual information, and emotional information.

In some embodiments, the dimension of the embedding information corresponding to the first token may or may not be equal to the dimension of the facial feature. In some embodiments, when the dimension of the embedding information corresponding to the first token is equal to the dimension of the facial feature, the embedding information corresponding to the first token is directly concatenated with the facial feature.

In some embodiments, when the dimension of the embedding information corresponding to the first token is not equal to the dimension of the facial feature, the dimension of the embedding information corresponding to the first token is converted to be equal to the dimension of the facial feature through dimensionality reduction, and then concatenation is performed.

The first token is a preset word configured for representing a person. In some embodiments, the first token may be a personal pronoun that refers to a person, or may be a word that indicates the gender of the person. In some embodiments, the first token includes "man" and "woman". In some embodiments, the first token includes "she", "he", and "person". The first token used in this application is merely for describing this embodiment, and a person skilled in the art may set other first tokens according to an application scene. This is not limited in this application.

The MLP is an artificial neural network (ANN) architecture and is configured for machine learning tasks.

For example, it is assumed that the description text is "a sad woman is under a tree", the text model is a CLIP text model, and the facial recognition model is a Tface model. The description text is processed by the CLIP text model to obtain text embedding information. The text embedding information is a $77 \times 768$ matrix and includes embedding information corresponding to tokens in the description text. The matrix refers to 77 tokens and 768 features corresponding to the 77 tokens. The number of tokens in the description text may be less than 77. In this case, the CLIP text model may automatically fill in a meaningless value. The meaningless value is a preset word that does not participate in training. A first token corresponding to the description text is "woman", and embedding information corresponding to "woman" is a $1 \times 768$ vector. The facial feature extracted by the facial recognition model from the original portrait picture is a $1 \times 25,088$ vector. The embedding information corresponding to the first token is concatenated with the facial feature to obtain updated embedding information with a size of $1 \times 25,856$. The updated embedding information is processed by the MLP to obtain final embedding information corresponding to the first token. That is, the final embedding information corresponding to the first token is a $1 \times 768$ vector. The first neural network requires matrix operations during editing. Therefore, only when the final embedding information corresponding to the first token has the same dimension as the original corresponding embedding information, the conditional embedding information is a matrix including a plurality of vectors having the same dimensions.

In the foregoing manner, the facial feature is embedded into the text embedding information, and during the subsequent personalized editing of the original portrait picture according to the description text, the facial feature can be better retained.

In some embodiments, a facial region in the original portrait picture is cropped to obtain a facial picture corresponding to the original portrait picture. Facial features are extracted from the facial picture through the facial recognition model.

In some embodiments, the facial region in the original portrait picture may be manually cropped, or the facial region in the original portrait picture may be cropped using a neural network model. This is not limited in this application.

In some embodiments, the cropped facial picture may be a regular graphic or an irregular graphic. This is not limited in this application. For example, the cropped facial picture is a smallest rectangular box containing a complete facial region.

In the foregoing manner, the features extracted by the facial recognition model are only related to the human face, helping well retain the facial features during the subsequent complex personalized editing.

Operation 220: Generate a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression feature in the facial region.

The cross-attention map is configured for describing response degrees, at different positions of a picture, between embedding information corresponding to different tokens. The expression content may refer to a facial expression in the facial region.

In a possible implementation, a manner for generating the cross-attention map corresponding to the original portrait picture according to the original portrait picture, the conditional embedding information, and the facial mask map may be as follows: compressing the original portrait picture to obtain a latent space picture, the latent space picture being a picture having a dimension lower than a dimension of the original portrait picture and retaining the facial feature. Then, the cross-attention map corresponding to the original portrait picture is generated according to the latent space picture, the conditional embedding information, and the facial mask map.

The latent space picture is a particular vector space obtained by mapping the original portrait picture. Vectors in the latent space picture are continuous, and follow the probability distribution. For example, the vectors in the latent space picture follow a multi-dimensional normal distribution.

In the embodiments of this application, a dimension may refer to the number of features in a data representation or in a data space. Specifically, the original portrait picture may be represented through a large number of features, such as texture, shape, and color distribution. Therefore, the original portrait picture may be regarded as a high-dimensional vector space, that is, the number of features representing the original portrait picture is very large. The latent space picture is obtained through mapping to a latent space, so that a high-dimensional data space is converted into a low-dimensional data space, that is, the latent space picture uses fewer features for representation. The latent space picture is a picture having a dimension lower than a dimension of the original portrait picture, and the dimension herein refers to the number of features for representing a picture, that is, the number of features of the latent space picture is less than the number of features of the original portrait picture, thereby removing redundant information and reducing noise interference. Thus, the picture is more compact and easier to process in the latent space, thereby facilitating subsequent processing.

In some embodiments, the original portrait picture is compressed through a compression model to obtain the latent space picture. The compression model is a generative deep learning model, and is configured to learn and generate a latent space picture of an original portrait picture. The compression model may be a variational autoencoder (VAE).

In the foregoing manner, the original portrait picture is compressed into the latent space picture, helping reduce storage and calculation overheads in the process of processing the original portrait picture, and retaining the facial features in the original portrait picture.

A manner for generating the cross-attention map corresponding to the original portrait picture according to the original portrait picture, the conditional embedding information, and the facial mask map may be as follows: performing a cross-attention operation (or, computation) based on the original portrait picture and the conditional embedding information to obtain an initial cross-attention map corresponding to the original portrait picture. The initial cross-attention map refers to a cross-attention map in which other regions than the facial region are not masked. In this application, the cross-attention map refers to a cross-attention map in which the other regions than the facial region are masked. Therefore, other regions than the facial region in the initial cross-attention map may continue to be masked based on the facial mask map to obtain the cross-attention map corresponding to the original portrait picture.

A manner for obtaining the initial cross-attention map corresponding to the original portrait picture is not limited in the embodiments of this application. In a possible implementation, a cross-attention operation may be directly performed on the original portrait picture and the conditional embedding information to obtain the initial cross-attention map. In another possible implementation, to reduce storage and calculation overheads in the process of processing the original portrait picture, the original portrait picture may be first compressed to obtain the latent space picture, and then a cross-attention operation is performed on the latent space picture and the conditional embedding information to obtain the initial cross-attention map. That is, when the cross-attention map corresponding to the original portrait picture is generated according to the latent space picture, the conditional embedding information, and the facial mask map, a cross-attention operation may be first performed on the latent space picture and the conditional embedding information to obtain the initial cross-attention map, and then the other regions than the facial region in the initial cross-attention map are masked based on the facial mask map to obtain the cross-attention map corresponding to the original portrait picture.

In some embodiments, a cross-attention operation is performed on the latent space picture and the conditional embedding information to obtain the initial cross-attention map. In some embodiment, the cross-attention operation is performed by using a softmax function. A formula for the cross-attention operation is:

$$M = Softmax\left(\frac{QK^T}{\sqrt{d}}\right),$$

where $M$ represents the initial cross-attention map, $Q$ represents the latent space picture, $K$ is conditional embedding information, $K^T$ is transposition of $K$, and $d$ is the dimension of the latent space picture.

For example, FIG. 3 is a schematic diagram of a generation process of a cross-attention map according to an embodiment of this application. A latent space picture is used as Q in a cross-attention mechanism, conditional embedding information is used as K in the cross-attention mechanism, and an initial cross-attention map M is calculated according to the foregoing cross-attention operation formula. Then, the initial cross-attention map M is multiplied by a facial mask map F to finally obtain a cross-attention map A.

The initial cross-attention map refers to a cross-attention map in which the other regions than the facial region are not masked. In this application, the cross-attention map refers to a cross-attention map in which the other regions than the facial region are masked.

In some embodiments, one cross-attention map corresponds to embedding information corresponding to one token, the embedding information corresponding to one token may correspond to at least one cross-attention map, and the number of cross-attention maps, to which the embedding information corresponding to one token may correspond, is determined by a first neural network. For example, assuming that the first neural network has m cross-attention layers, and the conditional embedding information corresponds to n tokens, there are m × n cross-attention maps in total, where m and n are both positive integers.

In some embodiments, the first neural network includes a cross-attention layer. Therefore, a manner for generating the cross-attention map corresponding to the original portrait picture according to the latent space picture, the conditional embedding information, and the facial mask map may be as follows: generating the initial cross-attention map corresponding to the original portrait picture through the first neural network according to the latent space picture and the conditional embedding information, that is, performing a cross-attention operation on the latent space picture and the conditional embedding information using the cross-attention layer in the first neural network to obtain the initial cross-attention map; and masking other regions than the facial region in the initial cross-attention map based on the facial mask map to obtain the cross-attention map corresponding to the original portrait picture.

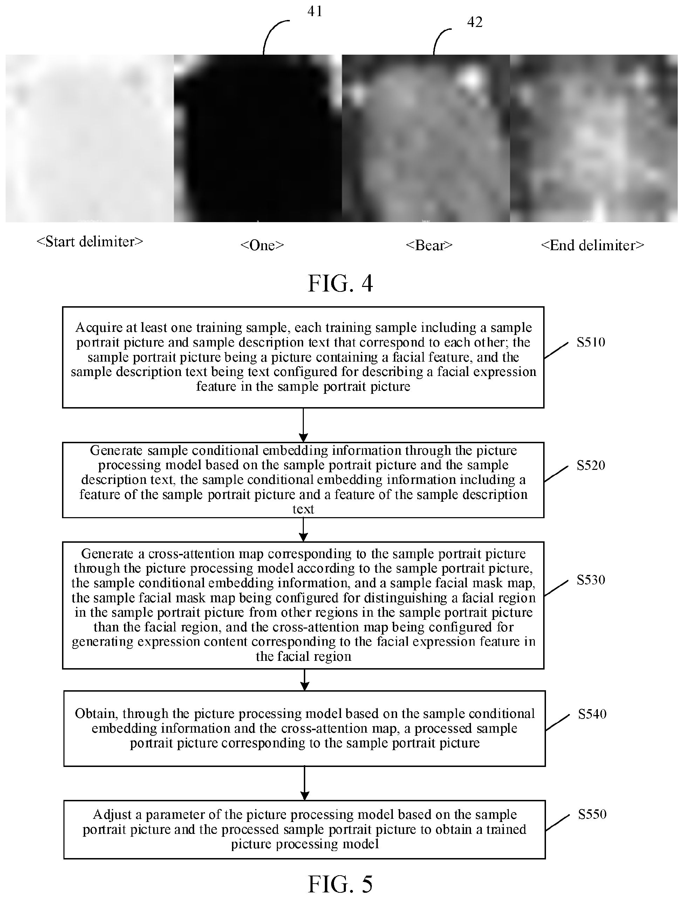

For example, FIG. 4 is a schematic diagram of cross-attention maps according to an embodiment of this application. The text description is "one bear", and corresponding tokens are "one" and "bear". The token "one" corresponds to a cross-attention map (shown by reference numeral 41 in FIG. 4), and the token "bear" corresponds to a cross-attention map (shown by reference numeral 42 in FIG. 4).

The facial mask map is a mask map in which a facial region is a response region, and the other regions than the facial region are masked regions. The mask map is a picture or a matrix having the same size as that of the original portrait picture. Each pixel or element in the mask map is configured for marking a particular region in the original portrait picture, that is, the facial region and the other regions than the facial region in the original portrait picture. There are multiple representation manners of a pixel value in the mask map, including but not limited to the following manners: binarization, multi-class, probability, and floating-point numbers. For example, the facial mask map is represented by binarization, 1 represents the facial region, and 0 represents other regions except the facial region.

In the foregoing manner, during expression editing of personalized editing, the original portrait picture is edited only in response to the facial region, so that responses of different tokens in the facial region to the expression editing are more accurate.

Operation 230: Obtain, based on the conditional embedding information and the cross-attention map, a processed portrait picture corresponding to the original portrait picture, the processed portrait picture retaining the facial feature in the original portrait picture and containing the facial expression feature described by the description text.

In some embodiments, when the description text is text configured for describing the environment feature and the facial expression feature, the processed portrait picture retains the facial feature in the original portrait picture and contains the environment feature and the facial expression feature that are described by the description text.

When the implementation of operation 220 differs, operation 230 may also have a different implementation. If in operation 220, the cross-attention map is directly obtained in the space of the original portrait picture, an implementation of operation 230 may be as follows: editing the original portrait picture based on the conditional embedding information and the cross-attention map to obtain the processed portrait picture corresponding to the original portrait picture.

If in operation 220, the cross-attention map is obtained in the latent space, that is, when operation 220 involves generating the cross-attention map corresponding to the original portrait picture according to the latent space picture, the conditional embedding information, and the facial mask map, an implementation of operation 230 may be as follows: editing the latent space picture based on the conditional embedding information and the cross-attention map to generate the processed portrait picture. The latent space picture is edited. The latent space picture has a dimension lower than that of the original portrait picture, helping reduce storage and calculation overheads in the editing process, and retaining the facial features in the original portrait picture.

In some embodiments, a manner for editing the latent space picture based on the conditional embedding information and the cross-attention map to generate the processed portrait picture may be as follows: adding a noise to the latent space picture for T times through the first neural network to obtain a noise picture, T being a positive integer; performing noise prediction and denoising operation on the noise picture for T times through the first neural network according to the conditional embedding information and the cross-attention map to obtain a denoised picture; and restoring the denoised picture to the dimension corresponding to the original portrait picture to generate the processed portrait picture.

The first neural network refers to a fully convolutional neural network configured to perform semantic segmentation tasks. The first neural network may be U-Net, or may be another fully convolutional neural network configured to perform semantic segmentation tasks. This is not limited in this application.

In some embodiments, during each noise addition, first, a noise strength is randomly acquired, and then noise of the noise strength is randomly added to the latent space picture through the first neural network. The noise strength is a value configured for describing a noise level or strength, and indicates a degree of perturbation of the noise to the original portrait picture. Higher noise strength indicates a larger impact of the noise on the original portrait picture. There are many manners for measuring the noise strength, which may include, but is not limited to, the following manners: a root mean squared error, a signal-to-noise ratio, a standard deviation, and a peak signal-to-noise ratio (PSNR). This is not limited in this application. In some embodiments, the denoised picture is restored to the dimension corresponding to the original portrait picture through the compression model to generate the processed portrait picture.

A manner for performing noise prediction and denoising operation on the noise picture for T times is not limited in the embodiments of this application, as long as the number of noise predictions is the same as the number of denoising operations. In some embodiments, performing noise prediction and denoising operation on the noise picture for T times may refer to performing one noise prediction to obtain a corresponding predicted noise, and then performing one denoising operation using the predicted noise. This process is repeated until a $T^{th}$ noise prediction is completed to obtain a corresponding predicted noise, and then a $T^{th}$ denoising operation is performed using the predicted noise obtained by the $T^{th}$ noise prediction, to obtain a final denoised picture.

In some other embodiments, performing noise prediction and denoising operation on the noise picture for T times may refer to performing noise predictions a plurality of times (for example, twice, 3 times, ..., and T times) to obtain corresponding predicted noises, and then performing denoising operations for the same number of times as the noise predictions using the obtained predicted noises. This process is repeated until T noise predictions and T denoising operations are completed, to obtain a final denoised picture.

Based on this, in some embodiments, a manner for performing noise prediction and denoising operation on the noise picture for T times through the first neural network to obtain the denoised picture may be as follows: predicting a noise added to the latent space picture through the first neural network for an $n^{th}$ time according to the conditional embedding information and the cross-attention map to obtain an $n^{th}$ predicted noise, an initial value of n being 1, and n being a positive integer less than or equal to T; removing the $n^{th}$ predicted noise from a noisy picture to obtain an updated noisy picture, an initialized noisy picture being the noise picture; determining, in response to that n is less than T, a value of n plus 1 as updated n, and repeating execution of the method from the operation of predicting the noise added to the latent space picture through the first neural network for the $n^{th}$ time according to the conditional embedding information and the cross-attention map to obtain $n^{th}$ predicted noise; and determining, in response to that n is equal to T, the updated noisy picture as the denoised picture.

For example, it is assumed that $x_0$ is the original portrait picture, $z$ is the latent space picture, $z_t$ is the noisy picture, $T$ is a total number of steps for adding noise, $C$ is the conditional embedding information, and for a time step $t$, the denoised picture may be obtained according to the following formula:

$$\hat{z}_0 = \frac{z_t - \sqrt{1 - \overline{\alpha}_t}\epsilon_\theta}{\sqrt{\overline{\alpha}_t}}, t < \delta T,$$

where $\varepsilon_\theta$ is $\varepsilon_\theta(z_t, t, C)$, representing a predicted noise predicted according to the noisy picture, a current time step $t$, and the conditional embedding information. $\delta$ is a hyperparameter for controlling an inversion time. $\overline{\alpha}_t$ represents an accumulated coefficient.

The sizes of the noisy picture, the noise picture, and the denoised picture are equal to that of the latent space picture.

In the foregoing manner, personalized content is generated on the original portrait picture.

In some embodiments, the picture processing method may be completed by a picture processing model. The picture processing model is a diffusion model configured to generate a processed portrait picture according to a sample portrait picture and sample description text, and includes a first neural network, a text model, a facial recognition model, an MLP, and a compression model. For example, an original portrait picture is compressed into a latent space picture through the compression model. Facial features in the original portrait picture are extracted using the facial recognition model. The text model encodes description text to obtain text embedding information. The facial feature and embedding information corresponding to a first token are concatenated to obtain updated embedding information. The updated embedding information is processed through the MLP to obtain final embedding information corresponding to the first token. The final embedding information corresponding to the first token is replaced with the text embedding information to obtain conditional embedding information. A corresponding processed portrait picture is generated through the first neural network according to the latent space picture and the conditional embedding information.

In summary, in the technical solutions provided in the embodiments of this application, the conditional embedding information is generated based on the original portrait picture and the description text. The original portrait picture is a picture including the facial feature, and the description text is text configured for describing the facial expression feature, so that the facial feature in the original portrait picture and the facial expression feature of the description text are fused in the conditional embedding information. Then, the cross-attention map corresponding to the original portrait picture is generated according to the conditional embedding information, the original portrait picture, and the facial mask map. The facial mask map is configured for distinguishing the facial region from other regions in the original portrait picture than the facial region, and the cross-attention map is configured for generating the expression content corresponding to the facial expression feature in the facial region. In this way, the processed portrait picture may be obtained through editing according to the conditional embedding information and the cross-attention map. Since the facial feature in the original portrait picture and the facial expression feature of the description text are fused in the conditional embedding information, when the cross-attention map instructs to generate the expression content corresponding to the facial expression features in the facial region, the facial feature in the original portrait picture and the facial expression feature of the description text may be fused to edit the facial expression, thereby ensuring a high similarity between a person in the generated processed portrait picture and a person in the original portrait picture, and significantly improving the person fidelity in an editing process.

A use procedure of the picture processing model is described above, and a training process of the picture processing model is described below. The use procedure of the picture processing model and method operations of the training procedure correspond to each other. Details not presented in the embodiments corresponding to the training procedure may refer to parts corresponding to the embodiments of the use procedure.

FIG. 5 is a flowchart of a method for training a picture processing model according to an embodiment of this application. An execution subject of operations of this method may be a computer device. For example, the computer device may be the model training device 10 in the solution implementation environment shown in FIG. 1. The method may include at least one of the following operations (510-550).

Operation 510: Acquire at least one training sample, each training sample including a sample portrait picture and sample description text that correspond to each other; the sample portrait picture being a picture containing a facial feature, and the sample description text being text configured for describing a facial expression feature in the sample portrait picture.

The "sample portrait picture" and the "sample description text" respectively correspond to the "original portrait picture" and the "description text" in operation 210 to operation 240. The "sample description text" is configured for describing content in the "sample portrait picture", but content described by the "description text" may not be completely related to the content in the "original portrait picture". For example, content in the "sample portrait picture" is that a woman is laughing, and the corresponding "sample description text" is "a woman is laughing". In this case, the content in the "sample description text" is consistent with the content in the "sample portrait picture", that is, the "sample description text" describes the content in the "sample portrait picture". For example, content in the "original portrait picture" is that a woman is laughing, but the "description text" is "a woman is crying". In this case, the content described by the "description text" is not completely related to the content in the "original portrait picture". In addition, the use of the "sample portrait picture" and the "sample description text" in this embodiment is the same as the use of the "original portrait picture" and the "description text" in the embodiments corresponding to operation 210 to operation 240. Except that a loss is calculated during the training process to adjust the parameters of the picture processing model, the processing procedures during the use and training processes of the picture processing model are consistent. Therefore, hereinafter, the "sample latent space picture" corresponds to the foregoing "latent space picture". These two words have the same function in the picture processing model except for their names, and the different names are merely used for distinguishing whether they are in the use process or the training process. The same applies to other similar words, which are not listed individually herein.

The picture processing model is a diffusion model configured to generate a processed portrait picture according to a sample portrait picture and sample description text, and includes a first neural network, a text model, a facial recognition model, an MLP, and a compression model. The diffusion model is a deep generative model that generates high-quality pictures through noise addition and a gradually increasing diffusion process.

In some embodiments, the training sample may be from an open-source data set, or may be a manually collected and annotated data set.

In some embodiments, when the training sample is a manually collected and annotated data set, the sample portrait picture of the training sample may be from an open-source data set, or may be a data set acquired through manual acquisition on a network or manual shooting and collection. Content of the acquired sample portrait picture may be manually described to generate sample description text corresponding to the sample portrait picture. Alternatively, picture content extraction may be performed on the acquired sample portrait picture through a picture-to-text model to generate sample description text corresponding to the sample portrait picture. The picture-to-text model is a deep learning model configured to generate descriptive text according to the content of sample portrait picture.

In the foregoing manner, training samples of high quality are acquired, facilitating obtaining a picture processing model with higher generalization capability, robustness, and performance.

Operation 520: Generate sample conditional embedding information through the picture processing model based on the sample portrait picture and the sample description text, the sample conditional embedding information including a feature of the sample portrait picture and a feature of the sample description text.

In some embodiments, the facial feature in the sample portrait picture is extracted through the facial recognition model. The sample description text is encoded through the text model included in the picture processing model to obtain sample text embedding information. Sample conditional embedding information is generated based on the facial feature and the sample text embedding information.

In some embodiments, the sample description text includes at least one token, and the sample text embedding information includes embedding information respectively corresponding to the at least one token. Embedding information corresponding to a first token in the at least one token is concatenated with the facial feature to obtain updated embedding information corresponding to the first token, the first token referring to a preset token configured for representing a person. The updated embedding information corresponding to the first token is processed using the MLP to obtain final embedding information corresponding to the first token, the final embedding information corresponding to the first token and the embedding information corresponding to the first token having a same dimension. The embedding information corresponding to the first token in the sample text embedding information is replaced with the final embedding information corresponding to the first token to generate the sample conditional embedding information.

Operation 520 corresponds to operation 210 in the foregoing embodiment, and their processing procedures and functional effects are similar. Therefore, details are not described herein again.

Operation 530: Generate a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region.

Operation 530 corresponds to operation 220 in the foregoing embodiment, and their processing procedures and functional effects are similar. Therefore, details are not described herein again.

In a possible implementation, an implementation of operation 530 may be as follows: compressing the sample portrait picture through the picture processing model to obtain a sample latent space picture, the sample latent space picture being a picture having a dimension lower than a dimension of the sample portrait picture and retaining the facial feature; and generating the cross-attention map corresponding to the sample portrait picture through the picture processing model according to the sample latent space picture, the sample conditional embedding information, and the sample facial mask map.

Similarly, the dimension herein refers to the number of features of a picture, that is, the number of features of the sample latent space picture is less than the number of features of the sample portrait picture, thereby removing redundant information and reducing noise interference. Thus, the picture is more compact and easier to process in the latent space, thereby facilitating subsequent processing.

A manner for generating the cross-attention map corresponding to the sample portrait picture through the picture processing model according to the sample portrait picture, the sample conditional embedding information, and the sample facial mask map may be as follows: performing a cross-attention operation (or, computation) based on the sample portrait picture and the sample conditional embedding information to obtain an initial cross-attention map corresponding to the sample portrait picture. The initial cross-attention map corresponding to the sample portrait picture refers to a cross-attention map in which other regions than the facial region are not masked. In this application, the cross-attention map corresponding to the sample portrait picture refers to a cross-attention map in which the other regions than the facial region are masked. Therefore, the other regions than the facial region in the initial cross-attention map corresponding to the sample portrait picture may continue to be masked based on the sample facial mask map to obtain the cross-attention map corresponding to the sample portrait picture.

A manner for obtaining the initial cross-attention map corresponding to the sample portrait picture is not limited in the embodiments of this application. In a possible implementation, a cross-attention operation may be directly performed on the sample portrait picture and the sample conditional embedding information to obtain the initial cross-attention map corresponding to the sample portrait picture. In another possible implementation, to reduce storage and calculation overheads in the process of processing the sample portrait picture, the sample portrait picture may be first compressed to obtain the sample latent space picture, and then a cross-attention operation is performed on the sample latent space picture and the sample conditional embedding information to obtain the initial cross-attention map corresponding to the sample portrait picture. That is, when the cross-attention map corresponding to the sample portrait picture is generated through the picture processing model according to the sample latent space picture, the sample conditional embedding information, and the sample facial mask map, a cross-attention operation may be first performed on the sample latent space picture and the sample conditional embedding information to obtain the initial cross-attention map corresponding to the sample portrait picture, and then the other regions than the facial region in the initial cross-attention map corresponding to the sample portrait picture are masked based on the sample facial mask map to obtain the cross-attention map corresponding to the sample portrait picture. A calculation formula of the cross-attention operation may refer to descriptions in operation 220, and details are not described herein again.

In some embodiments, the first neural network includes a cross-attention layer. Therefore, a manner for generating the cross-attention map corresponding to the sample portrait picture through the picture processing model according to the sample latent space picture, the sample conditional embedding information, and the sample facial mask map may be as follows: generating the initial cross-attention map corresponding to the sample portrait picture through the first neural network included in the picture processing model according to the sample latent space picture and the sample conditional embedding information, that is, performing a cross-attention operation on the sample latent space picture and the sample conditional embedding information through the cross-attention layer in the first neural network to obtain the initial cross-attention map corresponding to the sample portrait picture; and masking other regions than the facial region in the initial cross-attention map based on the sample facial mask map to obtain the cross-attention map corresponding to the sample portrait picture.

Operation 540: Obtain, through the picture processing model based on the sample conditional embedding information and the cross-attention map, a processed sample portrait picture corresponding to the sample portrait picture.

When the implementation of operation 530 differs, operation 540 may also have a different implementation. If in operation 530, the cross-attention map is directly obtained in the space of the sample portrait picture, an implementation of operation 5400 may be as follows: editing the sample portrait picture based on the sample conditional embedding information and the cross-attention map corresponding to the sample portrait picture to obtain the processed sample portrait picture corresponding to the sample portrait picture.

If in operation 530, the cross-attention map is obtained in the latent space, that is, when operation 530 involves generating the cross-attention map corresponding to the sample portrait picture through the picture processing model according to the sample latent space picture, the sample conditional embedding information, and the sample facial mask map, an implementation of operation 540 may be as follows: editing the sample latent space picture through the picture processing model based on the sample conditional embedding information and the cross-attention map to generate the processed sample portrait picture corresponding to the sample portrait picture.

In some embodiments, a manner for editing the sample latent space picture through the picture processing model based on the sample conditional embedding information and the cross-attention map to generate the processed sample portrait picture corresponding to the sample portrait picture may be as follows: adding a noise to the sample latent space picture for T times through the first neural network included in the picture processing model according to the conditional embedding information and the cross-attention map to obtain a sample noise picture, T being a positive integer; performing noise prediction and denoising operation on the sample noise picture for T times through the first neural network to obtain a sample denoised picture; and restoring the sample denoised picture to the dimension corresponding to the sample portrait picture to generate the processed sample portrait picture.

A manner for performing noise prediction and denoising operation on the sample noise picture for T times is not limited in the embodiments of this application, as long as the number of noise predictions is the same as the number of denoising operations. In some embodiments, performing noise prediction and denoising operation on the sample noise picture for T times may refer to performing one noise prediction to obtain a corresponding predicted noise, and then performing one denoising operation using the predicted noise. This process is repeated until a $T^{th}$ noise prediction is completed to obtain a corresponding predicted noise, and then a $T^{th}$ denoising operation is performed using the predicted noise obtained by the $T^{th}$ noise prediction, to obtain a final sample denoised picture.

In some other embodiments, performing noise prediction and denoising operation on the sample noise picture for T times may refer to performing noise prediction for a plurality of times (for example, twice, 3 times, ..., and T times) to obtain corresponding predicted noises, and then performing denoising operations for the same number of times as the noise predictions using the obtained predicted noises. This process is repeated until T noise predictions and T denoising operations are completed, to obtain a final sample denoised picture.

Based on this, in some embodiments, an implementation of performing noise prediction and denoising operation on the sample noise picture for T times through the first neural network to obtain the sample denoised picture may be as follows: predicting a noise added to the sample latent space picture through the first neural network for an $n^{th}$ time according to the sample conditional embedding information and the cross-attention map to obtain an $n^{th}$ predicted noise, an initial value of n being 1, and n being a positive integer less than or equal to T; removing the $n^{th}$ predicted noise from a sample noisy picture to obtain an updated sample noisy picture, an initialized sample noisy picture being the sample noise picture; determining, in response to that n is less than T, a value of n plus 1 as updated n, and repeating execution of the method from the operation of predicting the noise added to the sample latent space picture through the first neural network for the $n^{th}$ time according to the sample conditional embedding information and the cross-attention map to obtain the $n^{th}$ predicted noise; and determining, in response to that n is equal to T, the updated sample noisy picture as the sample denoised picture.

In some embodiments, a noise loss is determined based on the noise added to the sample latent space picture for the $n^{th}$ time and the $n^{th}$ predicted noise, where the noise loss indicates a difference between the added noise and the predicted noise. The parameter of the first neural network is adjusted based on the noise loss.

For example, after the noise added to the sample latent space picture for a $t^{th}$ time and the $t^{th}$ predicted noise are obtained, the noise loss $\mathcal{L}_{noise}$ is calculated by calculating a distance between the noise added to the sample latent space picture for the $t^{th}$ time and the $t^{th}$ prediction noise. A noise loss function may be defined as:

$$\mathcal{L}_{noise} = \mathbb{E}_{z \sim \varepsilon(x)}, C, \epsilon \sim \mathcal{N}(0,1), t \left[\|\epsilon - \epsilon_\theta(z_t, t, C)\|_2^2\right],$$

$$z_t \sim \mathcal{N}\left(\sqrt{\alpha_t} z_{t-1}, 1 - \alpha_t\right),$$

where $\varepsilon$ is an VAE, $Z$ is the latent space picture, $C$ is conditional embedding information, $\varepsilon_\theta$ is a denoiser used by predicted noise $\theta$, $\varepsilon$ is a random sample extracted from the standard normal distribution, $z_t$ is a sample noisy picture obtained after this denoising, $z_t$ is a sample noisy picture obtained after $(t-1)^{th}$ denoising, $t$ represents a current time step, and $\alpha_t$ is a predefined coefficient sequence, configured for controlling a variance change in a model training process. The parameters of the first neural network are adjusted according to the noise loss. A closed form of the probability distribution $p(z_t|z_0)$ may be deduced through the foregoing formula:

$$z_t = \sqrt{\bar{\alpha}_t} z_0 + (1 - \bar{\alpha}_t)\epsilon, \ \bar{\alpha}_t = \prod_{s=1}^{t} \alpha_s, \epsilon \sim \mathcal{N}(0,1),$$

where $\bar{\alpha}_t$ represents an accumulated coefficient.

In the foregoing manner, the parameter of the first neural network is adjusted according to the noise loss so that the first neural network may more accurately predict the noise.

Operation 550: Adjust a parameter of the picture processing model based on the sample portrait picture and the processed sample portrait picture to obtain a trained picture processing model.

In some embodiments, a total loss is determined based on the sample portrait picture and the processed sample portrait picture. The total loss includes a noise loss, an identity loss, and a facial position loss. The noise loss indicates a difference between an added noise and a predicted noise, the identity loss indicates a difference between a feature representation of the sample portrait picture and a feature representation of the processed sample portrait picture in the facial region, and the facial position loss indicates a control ability of the cross-attention map in the facial region. The parameter of the picture processing model is adjusted according to the total loss to obtain the trained picture processing model.

In some embodiments, the parameter of the picture processing model may be adjusted according to the total loss through gradient descent, random search, grid search, etc. This is not limited in this application.

In some embodiments, when the parameter of the picture processing model is adjusted, only parameters of the first neural network and the MLP in the picture processing model may be adjusted, and other parameters are not adjusted. Which of the parameters are adjusted is selected by a person skilled in the art according to requirements. This is not limited in this application.

The total loss of the picture processing model is jointly determined by the noise loss, the identity loss, and the facial position loss.

For example, assuming that the picture processing model completes one training in this case, and a processed sample portrait picture corresponding to the sample portrait picture is obtained, a total loss is calculated by estimating a difference between the sample portrait picture and the corresponding processed sample portrait picture. The total loss is defined as:

$$\mathcal{L}_{total} = \mathcal{L}_{loc} + \mathcal{L}_{noise} + \mathcal{L}_{id},$$

where $\mathcal{L}_{total}$ is a total loss of the current training of the picture processing model, $\mathcal{L}_{loc}$ represents the facial position loss, $\mathcal{L}_{noise}$ represents the noise loss, and $\mathcal{L}_{id}$ represents the identity loss.

In some embodiments, after completing training with a batch of training samples, the picture processing model adjusts the parameter of the MLP according to the total loss. A batch of training samples may include one training sample or a plurality of training samples.

For example, when the batch of training samples includes a plurality of training samples, description text in the training samples is the same text, and sample portrait pictures in the training samples have differences in clarity, noise quantity, and the like.

In the foregoing manner, comprehensively considering losses in three aspects helps adjust the picture processing model to suitable parameters in the training process, so that the picture processing model has higher accuracy and generalization capabilities.

In some embodiments, the noise loss is determined based on the noise added and the predicted noise in the process of editing the sample latent space picture. The identity loss is determined based on the sample portrait picture and the processed sample portrait picture. The facial position loss is determined based on the sample facial mask map and the cross-attention map. The total loss is determined according to the noise loss, the identity loss, and the facial position loss.

In the foregoing process of editing the sample latent space picture, the noise loss is calculated.

The cross-attention map is configured for controlling the picture processing model to respond only to a picture area corresponding to the cross-attention map when editing the sample portrait picture, and the facial position loss indicates the accuracy of a position indicated by the cross-attention map in the sample portrait picture.

Since a cross-attention map corresponding to a first token and a cross-attention map corresponding to another token are limited to respond in the same region, a sum of attention weights of the cross-attention map corresponding to the first token and the cross-attention map corresponding to the another token is 1. That is, the cross-attention map corresponding to the first token and the cross-attention map corresponding to the another token may contend during response to editing. Therefore, other constraints need to be introduced to control the weights of the cross-attention map corresponding to the first token and the cross-attention map corresponding to the another token to maintain within a particular threshold.

For example, it is assumed that the number of cross-attention layers in the first neural network is $N$, the number of tokens corresponding to the conditional embedding information is $n$, and the facial position loss is calculated through an absolute error loss, which is defined as:

$$\mathcal{L}_{loc} = \frac{1}{N}\sum_{l=1}^{N} \lambda\big(A_l^i(1-M) + relu(\beta - A_l^i)M\big),$$

$$+ \frac{1}{N}\sum_{l=1}^{N} \mu\big(A_l^j(1-M) + relu(\gamma - A_l^j)M\big),$$

where $A_l^i$ is a cross-attention map of an $i$th token in a cross-attention layer $l$, $A_l^i \in [0,1]$, and $i$ is a positive integer. $A_l^j$ is a cross-attention map of a $j$th in the cross-attention layer $l$, $A_l^j \in [0,1]$, and $j$ is a positive integer. $M$ refers to a facial mask map. $\beta$ and $\gamma$ represent control strengths of the cross-attention map over the first token and an expression token, separately. $\lambda$ and $\mu$ are positioning loss rates of identity and expression markers, respectively, which are 0.001 and 0.01, respectively. $relu(*)$ represents that if a value of a formula $*$ is less than 0, a value of $relu(*)$ is 0, and if the value of the formula

\* is greater than 0, the value of *relu*(\*) is equal to the value of the formula \*.

In the foregoing manner, the facial position loss is calculated, so that during the personalized editing of the picture, it is beneficial for the picture processing model to more accurately generate personalized content on the sample portrait picture.

In some embodiments, the facial feature in the sample portrait picture is extracted through the facial recognition model to obtain a first facial feature. The facial feature in the processed sample portrait picture is extracted through the facial recognition model to obtain a second facial feature. The identity loss is determined based on a similarity between the first facial feature and the second facial feature.

There are multiple manners for calculating the similarity between the first facial feature and the second facial feature, including but not limited to the following manners: a cosine similarity, a mean squared error (MSE), a structural similarity index (SSIM), a PSNR, and a feature vector similarity.

For example, the picture processing model generates a corresponding processed sample portrait picture $\hat{x}_0^{face}$ according to a sample portrait picture *f* and the sample description text. A similarity between the sample portrait picture *f* and the processed sample portrait picture $\hat{x}_0^{face}$ is calculated using a cosine similarity. The identity loss function may be defined as:

$$\mathcal{L}_{id} = 1 - \cos sim\left(\varphi(f), \varphi\left(\hat{x}_0^{face}\right)\right),$$

where cos *sim*(*a, b*) is a cosine similarity calculation formula to calculate a cosine similarity between *a* and *b*. $\varphi$ represents the facial recognition model, and $\varphi$(\*) represents features extracted from \* through $\varphi$.

In summary, according to the technical solutions provided in the embodiments of this application, at least one high-quality training sample is acquired. The sample conditional embedding information is generated based on the sample portrait picture and the sample description text in the training sample. Then, the cross-attention map corresponding to the sample portrait picture is generated through the picture processing model according to the sample portrait picture, the sample conditional embedding information, and the sample facial mask map. The processed sample portrait picture is obtained through editing according to the sample conditional embedding information and the cross-attention map. The parameter of the picture processing model is adjusted based on the sample portrait picture and the processed sample portrait picture to obtain the trained picture processing model. Therefore, the picture processing model exhibits improved robustness and generalization capabilities, enabling more diversified personalized editing while better retaining in the generated processed sample portrait pictures the facial feature in the sample portrait picture.

A specific scene in which a method for training a picture processing model is adopted is described below.

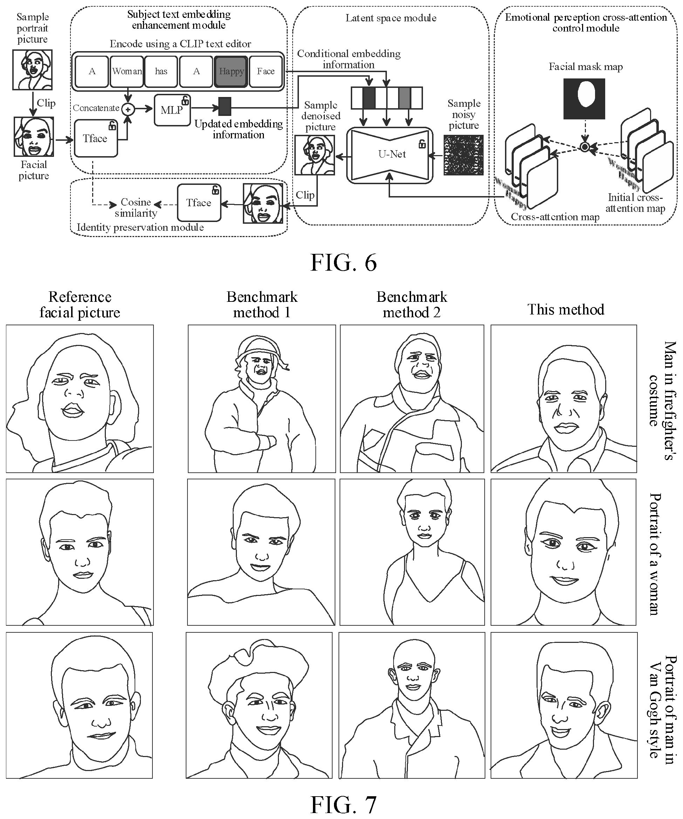

FIG. 6 is a flowchart of a training process of a picture processing model according to an embodiment of this application.

The picture processing model includes a Tface facial recognition model, a CLIP text editor, a VAE, a two-layer MLP, and a U-Net model. In FIG. 6, four modules are included: a subject text embedding enhancement part, a latent space part, an emotional perception cross-attention control part, and an identity preservation part.

The subject text embedding enhancement part performs the following operations through the Tface facial recognition model, the CLIP text editor, and the two-layer MLP:

(1) extracting facial features in a sample portrait picture through the Tface facial recognition model;

(2) extracting text embedding information of sample description text through the CLIP text editor; determining embedding information corresponding to a first token from the text embedding information, and concatenating the embedding information corresponding to the first token with the facial features to obtain updated embedding information; and

(3) restoring the updated embedding information to a dimension of sample embedding information through the two-layer MLP, and replacing the updated embedding information with the text embedding information to obtain sample conditional embedding information.

The emotional perception cross-attention control part performs the following operations through the U-Net model:

(1) generating a cross-attention map corresponding to the sample portrait picture through the U-Net model according to a sample latent space picture, the sample conditional embedding information, and a sample facial mask map; and

(2) calculating a facial position loss according to the sample facial mask map and the cross-attention map.

The latent space part performs the following operations through the VAE and the U-Net model:

(1) compressing the sample portrait picture into the sample latent space picture through the VAE;

(2) adding a noise to the sample latent space picture through the U-Net model to obtain a sample noise picture;

(3) predicting and removing a noise from the sample noise picture through the U-Net model to obtain a sample denoised picture;

(4) calculating a noise loss according to the sample noise picture and the sample denoised picture, and adjusting parameters of the U-Net model according to the noise loss; and

(5) restoring the sample denoised picture to a dimension corresponding to the sample portrait picture through the VAE to obtain a processed sample portrait picture.

The identity preservation part performs the following operations through the Tface facial recognition model:

(1) separating facial features of the sample portrait picture and facial features of the corresponding processed sample portrait picture through the Tface facial recognition model, and calculating an identity loss through a cosine similarity; and

(2) calculating a total loss according to the noise loss, the facial position loss, and the identity loss, and adjusting parameters of the two-layer MLP according to the total loss.

An embodiment in which an experiment is conducted using the method of this application is described below.

(1) Data set

An experimental training data set is constructed using a CelebV-T data set. The CelebV-T data set includes 70,000 videos and provides additional text description. The first frame and the last frame of each video in the CelebV-T data set are extracted as sample portrait pictures, and sample description text corresponding to each sample portrait picture is generated using a Recognize Anything model. The obtained training data set is a data set in which the sample portrait picture and the description text are paired one by one. A frame is randomly selected from a middle part of each video in the CelebV-T data set, and a facial region of the frame is clipped and used as a reference facial picture. Then, corresponding facial mask maps for all sample portrait pictures are generated using a pre-trained face parsing model.

(2) Experimental details

Facial features in the sample portrait picture are extracted using the Tface facial recognition model. In a training process, only the U-Net model and the two-layer MLP are trained, and the CLIP text editor is not trained. The picture processing model is iteratively trained on 6 NVIDIA V100 (6V100 is approximately 3A100) (graphics processing unit) GPUs 150,000 times, the learning rate is set to $10^{-5}$, and the batch size is set to 2. Text adjustment training is performed using 10% of training samples, to maintain a pure text generation capability of the picture processing model. To facilitate classifier-free guidance sampling, under no constraint of other conditions, 10% of samples are adopted for training. In the training process, half of the samples are adopted to train the facial region of the sample portrait picture, to improve the generation quality of the personalized content of the facial region. Truncated cross-attention control relates to 7 emotional words, such as happy, angry, and sad. The truncated cross-attention control herein refers to introducing a truncation parameter to control the response strength of an emotional token in the facial region.

(3) Evaluation indicators

Following a method used in FastComposer, the generation quality of a processed sample portrait picture is evaluated based on facial feature reservation and contrast language-image pretraining text-image (CLIP-TI) consistency. Facial feature reservation is determined by enabling the MTCNN to detect faces in the reference facial picture and the processed sample portrait picture, and then a pairwise identity similarity is calculated using FaceNet. A similarity between a personalized portrait picture and the sample description text is evaluated using an average CLIP-L/14 image-text similarity. In terms of efficiency evaluation, the efficiency of the picture processing model is evaluated using a total time of fine-tuning and inference. During evaluation, different numbers of GPUs are further considered. In a default case, all methods are run on a standard hyperparameter set, using a Euler sampling method with 50 steps and a classifier-free guidance scale of 5 for all methods.

(4) Generation experiment of processed picture

Performance of the picture processing model and other existing methods is evaluated using a single-subject evaluation method used in FastComposer. Existing methods involved in comparison include: DreamBooth, Textual-Inversion, Custom Diffusion, and SubjectDiffusion. Since Face0 provides no open-source code, only its publicly available hardware resources are used for comparison. Stable Diffusion is set to a pure text baseline method. A training set for testing includes 15 person subjects and 30 pieces of text. The sample description text for testing covers multiple scenes, such as changing a picture style, changing picture decoration, and changing a person's action. Five sample portrait pictures per person subject are adopted to fine-tune optimization-based methods. For a one-shot-based method, a sample portrait picture corresponding to each person subject is randomly selected for testing. Table 1 shows results of comparisons between the method of this application (referred to as "PortraitBooth" below) and benchmark methods for single-subject image generation. PortraitBooth significantly outperforms other benchmark methods in preserving facial features. FIG. 7 is a comparison diagram of generated processed sample portrait pictures according to an embodiment of this application. FastComposer corresponds to the benchmark method 1, and Subject-Diffusion corresponds to the benchmark method 2. PortraitBooth is weaker than FastComposer in terms of sample description text consistency. The shortcoming may be due to the fact that PortraitBooth is more inclined to preferentially consider fidelity of facial features, and therefore, some attention on complex tokens may be given up.

Table 1 Comparison between PortraitBooth and other benchmark methods for single-subject image generation

| Method | Type | Reference facial picture ↓ | Identity preservation ↑ | CLIP-TI ↑ | Test time ↓ | Training overhead |
|---|---|---|---|---|---|---|
| Stable Diffusion | Zero Shot | 0 | 0.039 | 0.268 | ≈ 1 s | - |
| Face0 | One Shot | 1 | - | - | ≈ 1 s | 64 TPU |
| Textual-Inversion | Finetune | 5 | 0.293 | 0.219 | ≈ 2,500 s | 1 V100 |
| DreamBooth | Finetune | 5 | 0.273 | 0.239 | ≈ 1,084 s | 1 V100 |
| Custom Diffusion | Finetune | 5 | 0.434 | 0.233 | ≈ 789 s | 1 V100 |
| FastComposer ($\alpha = 0.6$) | One Shot | 1 | 0.514 | 0.243 | ≈ 1 s | 8 A6000 |
| FastComposer ($\alpha = 1$) | One Shot | 1 | 0.632 | 0.205 | ≈ 1 s | 8 A6000 |
| Subject-Diffusion | One Shot | 1 | 0.605 | 0.228 | ≈ 1 s | 24 A100 |
| PortraitBooth | One Shot | 1 | 0.649 | 0.236 | ≈ 1 s | 3 A100 |

5. Emotion editing

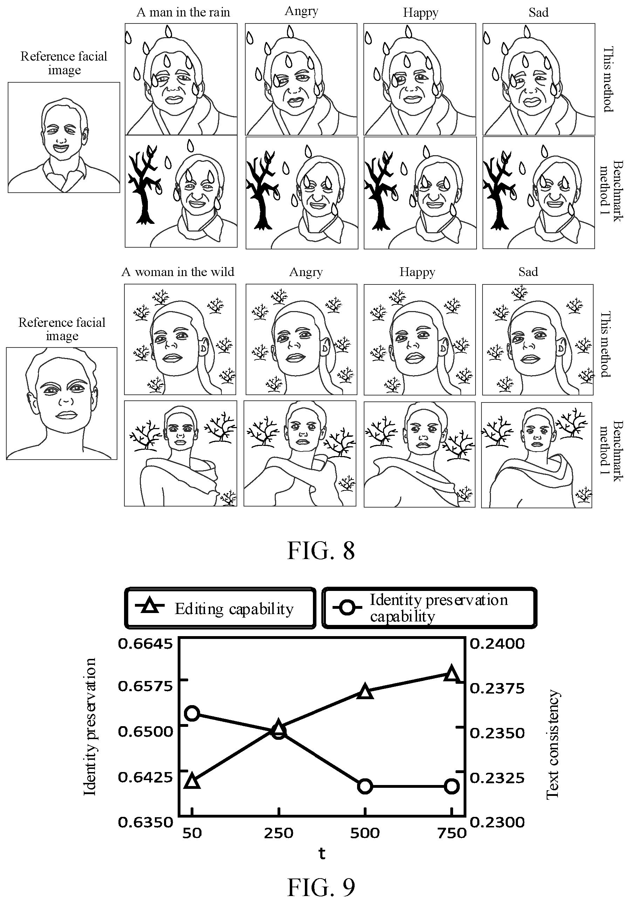

In terms of emotion editing, only FastComposer is used as a benchmark method. FIG. 8 is a comparison diagram of emotion editing according to an embodiment of this application. FastComposer corresponds to the benchmark method 1. It can be learned that PortraitBooth has diversity in terms of emotion editing.

(6) Ablation experiment

1) Influence of subject text embedding enhancement part on picture processing model

To investigate the influence of facial features obtained from a pre-trained facial recognition model and image encoder, an ablation experiment is conducted. The subject text embedding enhancement part is removed from the picture processing model, and the facial features are trained and extracted using a CLIP picture encoder to enhance text embedding information. As shown in Table 2 (a), the experimental results clearly show that utilizing a facial feature extractor trained on a large-scale data set is significantly more effective than training the image encoder.

2) Influence of identity preservation part on picture processing model

Table 2 (b) shows a result of an ablation experiment on the identity preservation part. The identity preservation part is removed from the picture processing model and trained under the same settings. The result indicates that the identity preservation part is beneficial to the fidelity of the facial features.

3) Influence of emotional perception cross-attention control part on picture processing model

To enable the picture processing model to focus on a semantically related facial region in a cross-attention module, control is performed using the cross-attention map. As shown in Table 2 (c), according to a result of an ablation experiment of the emotional perception cross-attention control part, using the cross-attention map greatly improves identity preservation and CLIP-TI consistency and enables the picture processing model to focus on a particular region, so that effects of conditional embedding information integrated by the facial features and text embedding information on the processed sample portrait pictures are consistent and harmonious.

Table 2 Results of different ablation experiments

| Ablation experiment type | | Identity preservation ↑ | CLIP-TI consistency ↑ |
|---|---|---|---|
| | PortraitBooth | 0.649 | 0.236 |
| (a) | Ablation experiment of subject text embedding enhancement part | 0.563 | 0.244 |
| (b) | Ablation experiment of identity preservation part | 0.638 | 0.239 |
| (c) | Ablation experiment of emotional perception cross-attention control part | 0.532 | 0.255 |

4) Influence of hyperparameter t on picture processing model

FIG. 9 is a line chart showing the influence of a time step on identity preservation according to an embodiment of this application. It can be known according to FIG. 9 that as the time step (t) for adjusting the identity loss increases, a fidelity capability of the picture processing model for the facial features increases, but an editing capability decreases. Therefore, when t is 250, the fidelity capability and the editing capability of the picture processing model for the facial features are well balanced.

5) Truncation hyperparameters $\beta$ and $\gamma$

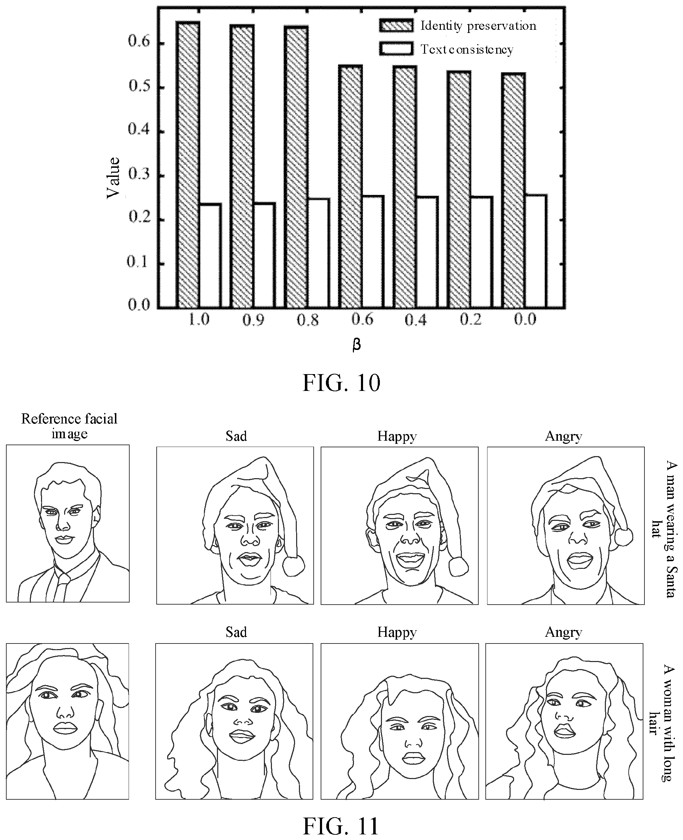

According to analysis on Table 2 (c), it is obtained that not restricting local regions leads to better editing capability, but worse identity preservation. To reduce the influence on identity preservation as much as possible, only the relationship between identity preservation and editing capability when only involving the truncation hyperparameter $\beta$ is studied. FIG. 10 is a bar chart showing the influence of a truncation hyperparameter on identity preservation and editing capability according to an embodiment of this application. When the truncation hyperparameter $\beta$ is within a range of [0.8,1], a change of the truncation hyperparameter has no significant influence on identity preservation, but has some influence on the editing capability. However, when the truncation hyperparameter $\beta$ is less than 0.8, identity preservation suddenly increases because the conditional embedding information significantly affects only the facial region. Table 3 shows experimental results of a facial mask map and a human body mask map, to confirm the conclusion that the conditional embedding information significantly affects only the facial region. Therefore, the truncation hyperparameter $\beta$ is selected to be set to 0.8. Similarly, experiments are also conducted for the truncation hyperparameter $\gamma$ at 0.1 and 0.2. As shown in Table 4, the truncation hyperparameter $\beta$ and the truncation hyperparameter $\gamma$ have little difference in their influences on identity preservation, but exhibit significant differences in the editing capability. The facial editing response not only includes an expression, but also includes features such as facial hair and accessories. Therefore, the truncation hyperparameter $\gamma$ is set to 0.1.

Table 3 Influence of different mask maps

| Mask map type | Identity preservation ↑ | CLIP-TI consistency ↑ |
|---|---|---|
| Facial mask map | 0.649 | 0.236 |
| Human body mask map | 0.623 | 0.229 |

Table 4 Influence of different combinations of truncation hyperparameters $\beta$ and $\gamma$

| Combination of truncation hyperparameters β and γ | Identity preservation ↑ | CLIP-TI consistency ↑ |
|---|---|---|
| $\beta = 0.8$ $\gamma = 0.1$ | 0.649 | 0.236 |
| $\beta = 0.8$ $\gamma = 0.2$ | 0.642 | 0.223 |

Table 5 shows performance comparison between PortraitBooth and other benchmark methods. 1 indicates that the method performs well in the corresponding aspect, and 0 indicates that the method performs poorly in the corresponding aspect. PortraitBooth is the only method that simultaneously addresses high efficiency, robust identity preservation, and diverse expression editing.

Table 5 Performance comparison between PortraitBooth and other benchmark methods

| Method | Single picture | Test time No fine-tuning | Robust identity preservation | Expression editing |
|---|---|---|---|---|
| Textual Inversion (Gal et al. 2022) | 0 | 0 | 0 | 1 |
| Dreambooth (Ruiz et al. 2023a) | 0 | 0 | 0 | 1 |
| Custom Diffusion (Kumari et al. 2023) | 0 | 0 | 0 | 1 |
| Break-A-Scene (Avrahami et al. 2023a) | 1 | 0 | 1 | 0 |
| HyperDreamBooth (Ruiz et al. 2023b) | 1 | 0 | 1 | 1 |
| FastComposer (Xiao et al. 2023) | 1 | 1 | 0 | 0 |
| Face0 (Valevski et al. 2023) | 1 | 1 | 1 | 0 |
| Subject-Diffusion (Ma et al. 2023) | 1 | 1 | 1 | 0 |
| PortraitBooth | 1 | 1 | 1 | 1 |

FIG. 11 is a schematic diagram of test results of a picture processing model according to an embodiment of this application. The picture processing model is obtained by training based on PortraitBooth.

The following describes apparatus embodiments of this application. The apparatus embodiments may be configured for performing the method embodiments of this application. Details not disclosed in the apparatus embodiments of this application may refer to the method embodiments of this application.

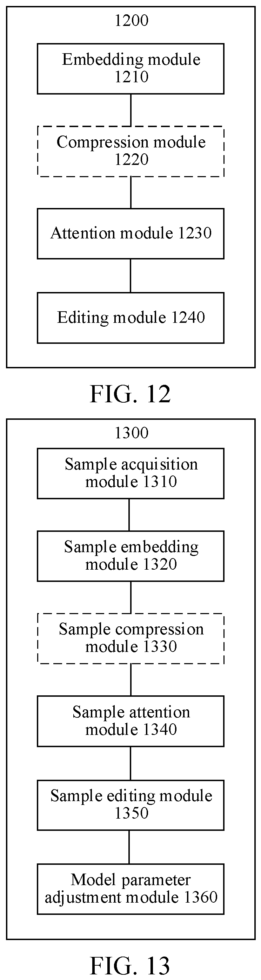

FIG. 12 is a block diagram of a picture processing apparatus according to an embodiment of this application. The apparatus has a function of implementing the foregoing method examples, and the function may be implemented by hardware or may be implemented by hardware executing corresponding software. The apparatus may be the model use device 10 described above, or may be provided in the model use device 10. As shown in FIG. 12, an apparatus 1200 may include an embedding module 1210, an attention module 1230, and an editing module 1240.

The embedding module 1210 is configured to generate conditional embedding information based on an original portrait picture and description text, the conditional embedding information including a feature of the original portrait picture and a feature of the description text; the original portrait picture being a picture containing a facial feature, and the description text being text configured for describing a facial expression feature.

The attention module 1230 is configured to generate a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression features in the facial region.

The editing module 1240 is configured to obtain, based on the conditional embedding information and the cross-attention map, a processed portrait picture corresponding to the original portrait picture, the processed portrait picture retaining the facial feature in the original portrait picture and containing the facial expression feature described by the description text.

In some embodiments, the apparatus 1200 may further include a compression module 1220, as shown in the dashed box in FIG. 12. The compression module 1220 is configured to compress the original portrait picture to obtain a latent space picture, the latent space picture being a picture having a dimension lower than a dimension of the original portrait picture and retaining the facial feature. The attention module 1230 is configured to generate the cross-attention map corresponding to the original portrait picture according to the latent space picture, the conditional embedding information, and the facial mask map. In some embodiments, the editing module 1240 includes a noise adding sub-module, a denoising sub-module, and a restoration sub-module (not shown in FIG. 12).

The noise adding sub-module is configured to add a noise to the latent space picture for T times through a first neural network to obtain a noise picture, T being a positive integer.

The denoising sub-module is configured to perform noise prediction and denoising operation on the noise picture for T times through the first neural network according to the conditional embedding information and the cross-attention map to obtain a denoised picture.

The restoration sub-module is configured to restore the denoised picture to the dimension corresponding to the original portrait picture to generate the processed portrait picture.

In some embodiments, the denoising sub-module is configured to predict a noise added to the latent space picture through the first neural network for an $n^{th}$ time according to the conditional embedding information and the cross-attention map to obtain an $n^{th}$ predicted noise, an initial value of n being 1, and n being a positive integer less than or equal to T; remove the $n^{th}$ predicted noise from a noisy picture to obtain an updated noisy picture, an initialized noisy picture being the noise picture; determine, in response to that n is less than T, a value of n plus 1 as updated n, and repeat execution from the operation of predicting the noise added to the latent space picture through the first neural network for the $n^{th}$ time according to the conditional embedding information and the cross-attention map to obtain $n^{th}$ predicted noise; and determine, when n is equal to T, the updated noisy picture as the denoised picture.

In some embodiments, the embedding module 1210 includes an extraction sub-module, an encoding sub-module, and a generation sub-module (not shown in FIG. 12).

The extraction sub-module is configured to extract the facial feature in the original portrait picture through a facial recognition model.

The encoding sub-module is configured to encode the description text through a text model to obtain text embedding information.

The generation sub-module is configured to generate the conditional embedding information based on the facial feature and the text embedding information.

In some embodiments, the description text includes at least one token, and the text embedding information includes embedding information respectively corresponding to the at least one token. The generation sub-module is configured to concatenate embedding information corresponding to a first token in the at least one token with the facial feature to obtain updated embedding information corresponding to the first token, the first token referring to a preset token configured for representing a person; process the updated embedding information corresponding to the first token using an MLP to obtain final embedding information corresponding to the first token, the final embedding information corresponding to the first token and the embedding information corresponding to the first token having a same dimension; and replace the embedding information corresponding to the first token in the text embedding information with the final embedding information corresponding to the first token to generate the conditional embedding information.

In some embodiments, the extraction sub-module is configured to crop the facial region from the original portrait picture to obtain a facial picture corresponding to the original portrait picture; and extract the facial feature from the facial picture through the facial recognition model.

In some embodiments, the attention module 1230 is configured to generate an initial cross-attention map corresponding to the original portrait picture through the first neural network according to the latent space picture and the conditional embedding information; and mask other regions in the initial cross-attention map than the facial region in the initial cross-attention map based on the facial mask map to obtain the cross-attention map corresponding to the original portrait picture.

In summary, in the technical solutions provided in the embodiments of this application, the conditional embedding information is generated based on the original portrait picture and the description text. The original portrait picture is a picture including the facial feature, and the description text is text configured for describing the facial expression feature, so that the facial feature in the original portrait picture and the facial expression feature of the description text are fused in the conditional embedding information. Then, the cross-attention map corresponding to the original portrait picture is generated according to the conditional embedding information, the original portrait picture, and the facial mask map. The facial mask map is configured for distinguishing the facial region in the original portrait picture from other regions in the original portrait picture than the facial region, and the cross-attention map is configured for generating the expression content corresponding to the facial expression feature in the facial region. In this way, the processed portrait picture may be obtained through editing according to the conditional embedding information and the cross-attention map. Since the facial feature in the original portrait picture and the facial expression feature of the description text are fused in the conditional embedding information, when the cross-attention map instructs to generate the expression content corresponding to the facial expression feature in the facial region, the facial feature in the original portrait picture and the facial expression feature of the description text may be fused to edit the facial expression, thereby ensuring a high similarity between a person in the generated processed portrait picture and a person in the original portrait picture, and significantly improving the person fidelity in an editing process.

FIG. 13 is a block diagram of an apparatus for training a picture processing model according to an embodiment of this application. The apparatus has a function of implementing the foregoing method examples, and the function may be implemented by hardware or may be implemented by hardware executing corresponding software. As shown in FIG. 13, an apparatus 1300 may include a sample acquisition module 1310, a sample embedding module 1320, a sample attention module 1340, a sample editing module 1350, and a model parameter adjustment module 1360.

The sample acquisition module 1310 is configured to acquire at least one training sample, each training sample including a sample portrait picture and sample description text that correspond to each other; the sample portrait picture being a picture containing a facial feature, and the sample description text being text configured for describing a facial expression feature in the sample portrait picture.

The sample embedding module 1320 is configured to generate sample conditional embedding information through the picture processing model based on the sample portrait picture and the sample description text, the sample conditional embedding information including a feature of the sample portrait picture and a feature of the sample description text.

The sample attention module 1340 is configured to generate a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region.

The sample editing module 1350 is configured to obtain, through the picture processing model based on the sample conditional embedding information and the cross-attention map, a processed sample portrait picture corresponding to the sample portrait picture.

The model parameter adjustment module 1360 is configured to adjust a parameter of the picture processing model based on the sample portrait picture and the processed sample portrait picture to obtain a trained picture processing model.

In some embodiments, the apparatus 1300 further includes a sample compression module 1330, as shown in the dashed box in FIG. 13. The sample compression module 1330 is configured to compress the sample portrait picture through the picture processing model to obtain a sample latent space picture, the sample latent space picture being a picture having a dimension lower than a dimension of the sample portrait picture and retaining the facial features. The sample attention module 1340 is configured to edit the sample latent space picture through the picture processing model based on the sample conditional embedding information and the cross-attention map to generate the processed sample portrait picture corresponding to the sample portrait picture.

In some embodiments, the sample editing module 1350 includes a sample noise adding sub-module, a sample denoising sub-module, and a sample restoration sub-module (not shown in FIG. 13).

The sample noise adding sub-module is configured to add a noise to the sample latent space picture for T times through a first neural network included in the picture processing model to obtain a sample noise picture, T being a positive integer.

The sample denoising sub-module is configured to perform noise prediction and denoising operation on the sample noise picture for T times through the first neural network according to the conditional embedding information and the cross-attention map to obtain a sample denoised picture.

The sample restoration sub-module is configured to restore the sample denoised picture to the dimension corresponding to the sample portrait picture to generate the processed sample portrait picture.

In some embodiments, the sample denoising sub-module includes a prediction unit, a denoising unit, a circulation unit, and a determining unit (not shown in FIG. 13).

The prediction unit is configured to predict a noise added to the sample latent space picture through the first neural network for an $n^{th}$ time according to the sample conditional embedding information and the cross-attention map to obtain an $n^{th}$ predicted noise, an initial value of n being 1, and n being a positive integer less than or equal to T.

The denoising unit is configured to remove the $n^{th}$ predicted noise from a sample noisy picture to obtain an updated sample noisy picture, an initialized sample noisy picture being the sample noise picture.

The circulation unit is configured to determine, in response to that n is less than T, a value of n plus 1 as updated n, and repeat execution from the operation of predicting the noise added to the sample latent space picture through the first neural network for the $n^{th}$ time according to the sample conditional embedding information and the cross-attention map to obtain the $n^{th}$ predicted noise.

The determining unit is configured to determine, in response to that n is equal to T, the updated sample noisy picture as the sample denoised picture.

In some embodiments, the prediction unit is further configured to determine a noise loss based on the noise added to the sample latent space picture for the $n^{th}$ time and the $n^{th}$ predicted noise, the noise loss indicating a difference between the added noise and the predicted noise; and adjust a parameter of the first neural network based on the noise loss.

In some embodiments, the sample embedding module 1320 includes a sample extraction sub-module, a sample encoding sub-module, and a sample generation sub-module (not shown in FIG. 13).

The sample extraction sub-module is configured to extract the facial feature in the sample portrait picture through a facial recognition model.

The sample encoding sub-module is configured to encode the sample description text through a text model included in the picture processing model to obtain sample text embedding information.

The sample generation sub-module is configured to generate the sample conditional embedding information based on the facial feature and the sample text embedding information.

In some embodiments, the sample description text includes at least one token, and the sample text embedding information includes embedding information respectively corresponding to the at least one token. The sample generation sub-module is configured to concatenate embedding information corresponding to a first token in the at least one token with the facial feature to obtain updated embedding information corresponding to the first token, the first token referring to a preset token configured for representing a person; process the updated embedding information corresponding to the first token using an MLP to obtain final embedding information corresponding to the first token, the final embedding information corresponding to the first token and the embedding information corresponding to the first token having a same dimension; and replace the embedding information corresponding to the first token in the sample text embedding information with the final embedding information corresponding to the first token to generate the sample conditional embedding information.

In some embodiments, the sample extraction sub-module is configured to crop the facial region from the sample portrait picture to obtain a facial picture corresponding to the sample portrait picture; and extract the facial feature from the facial picture through the facial recognition model.

In some embodiments, the sample compression module 1330 is configured to generate an initial cross-attention map corresponding to the sample portrait picture through the first neural network included in the picture processing model according to the sample latent space picture and the sample conditional embedding information; and mask other regions in the initial cross-attention map than the facial region in the initial cross-attention map based on the sample facial mask map to obtain the cross-attention map corresponding to the sample portrait picture.

In some embodiments, the model parameter adjustment module 1360 includes a loss sub-module and a parameter adjustment sub-module (not shown in FIG. 13).

The loss sub-module is configured to determine a total loss based on the sample portrait picture and the processed sample portrait picture, the total loss including a noise loss, an identity loss, and a facial position loss, the noise loss indicating a difference between an added noise and a predicted noise, the identity loss indicating a difference between a feature representation of the sample portrait picture and a feature representation of the processed sample portrait picture in the facial region, and the facial position loss indicating a control ability of the cross-attention map in the facial region.

The parameter adjustment sub-module is configured to adjust the parameter of the picture processing model according to the total loss to obtain the trained picture processing model.

In some embodiments, the loss sub-module includes a noise loss unit, an identity loss unit, a facial position loss unit, and a total loss unit (not shown in FIG. 13).

The noise loss unit is configured to determine the noise loss based on the noise added and the predicted noise in the process of editing the sample latent space picture.

The identity loss unit is configured to determine the identity loss based on the sample portrait picture and the processed sample portrait picture.

The facial position loss unit is configured to determine the facial position loss based on the sample facial mask map and the cross-attention map.

The total loss unit is configured to determine the total loss according to the noise loss, the identity loss, and the facial position loss.

In some embodiments, the identity loss unit is configured to extract the facial feature of the sample portrait picture through the facial recognition model to obtain a first facial feature; extract a facial feature of the processed sample portrait picture through the facial recognition model to obtain a second facial feature; and determine the identity loss based on a similarity between the first facial feature and the second facial feature.

In summary, according to the technical solutions provided in the embodiments of this application, at least one high-quality training sample is acquired. The sample conditional embedding information is generated based on the sample portrait picture and the sample description text in the training sample. Then, the cross-attention map corresponding to the sample portrait picture is generated through the picture processing model according to the sample portrait picture, the sample conditional embedding information, and the sample facial mask map. The processed sample portrait picture is obtained through editing according to the sample conditional embedding information and the cross-attention map. The parameter of the picture processing model is adjusted based on the sample portrait picture and the processed sample portrait picture to obtain the trained picture processing model. Therefore, the picture processing model exhibits improved robustness and generalization capabilities, enabling more diversified personalized editing while better retaining in the generated processed sample portrait pictures the facial features in the sample portrait picture.

When the apparatus provided in the foregoing embodiments implements functions of the apparatus, the division of the foregoing functional modules is merely an example for description. In actual application, the foregoing functions may be allocated to and completed by different functional modules according to the requirements, that is, the internal structure of the device is divided into different functional modules to complete all or some of the functions described above. In addition, the apparatus provided in the foregoing embodiment belongs to the same idea as the method embodiment. Details of a specific implementation process may refer to the method embodiment, and details are not described herein again.

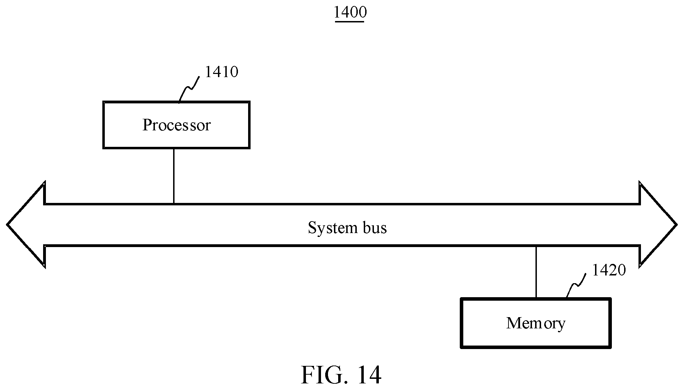

FIG. 14 is a structural block diagram of a computer device 1400 according to an embodiment of this application. The computer device 1400 may be a computer device 10 in the implementation environment shown in FIG. 1, and is configured to perform the picture processing method or the method for training a picture processing model provided in the foregoing embodiments. Specifically:

Generally, the computer device 1400 includes a processor 1410 and a memory 1420.

The processor 1410 may include one or more processing cores, for example, a 4-core processor or an 8-core processor. The processor 1410 may be implemented in at least one hardware form of a digital signal processing (DSP), a field programmable gate array (FPGA), and a programmable logic array (PLA). The processor 1410 may further include a main processor and a coprocessor. The main processor is a processor configured to process data in an awake state, and is alternatively referred to as a central processing unit (CPU). The coprocessor is a low-power-consumption processor configured to process data in a standby state. In some embodiments, the processor 1410 may be integrated with a GPU. The GPU is configured to render and draw content that needs to be displayed on a display screen. In some embodiments, the processor 1410 may further include an AI processor. The AI processor is configured to process computing operations related to machine learning.

The memory 1420 may include one or more computer-readable storage media. The computer-readable storage medium may be non-transient. The memory 1420 may further include a high-speed random access memory (RAM) and a nonvolatile memory, for example, one or more disk storage devices or flash storage devices. In some embodiments, the non-transitory computer-readable storage medium in the memory 1420 is configured to store a computer program. The computer program is configured to be executed by one or more processors to implement the foregoing picture processing method or the foregoing method for training a picture processing model.

A person skilled in the art may understand that the structure shown in FIG. 14 does not constitute any limitation on the computer device 1400, and the computer device 1400 may include more components or fewer components than those shown in the figure, or some components may be combined, or a different component deployment may be used.

In an exemplary embodiment, a computer-readable storage medium is further provided, having a computer program stored therein. The computer program, when executed by a processor, implements the foregoing picture processing method or the foregoing method for training a picture processing model. In some embodiments, the computer-readable storage medium may include: a read-only memory (ROM), a RAM, a solid state drive (SSD), an optical disc, or the like. The RAM may include a resistance random access memory (ReRAM) and a dynamic random access memory (DRAM).

In an exemplary embodiment, a computer program product is further provided, including a computer program, the computer program being stored in a computer-readable storage medium. A processor of a computer device reads the computer program from the computer-readable storage medium and executes the computer program to cause the computer device to perform the foregoing picture processing method or the foregoing method for training a picture processing model.

During application of the collection and processing of relevant data (such as pictures) in this application, informed consent or independent consent of the subject of personal information shall be obtained strictly according to requirements of laws and regulations of related nations, and subsequent data use and processing behaviors are performed within the laws and regulations and the authorization scope of the subject of personal information.

"A plurality of" mentioned herein refers to two or more. "And/or" describes an association relationship of associated objects and represents that three relationships may exist. For example, A and/or B may represent the following three cases: only A exists, both A and B exist, and only B exists. The character "/" generally represents an "or" relationship between the associated objects. In addition, the operation numbers described in this specification merely exemplarily show a possible execution sequence of the operations. In some other embodiments, the operations may not be performed according to the number sequence. For example, two operations with different numbers may be performed simultaneously, or two operations with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A picture processing method, performed by a computer device, and comprising:

   generating conditional embedding information based on an original portrait picture and description text, the conditional embedding information comprising a feature of the original portrait picture and a feature of the description text; the original portrait picture being a picture containing a facial feature, and the description text being text configured for describing a facial expression feature;

generating a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression feature in the facial region; and

obtaining, based on the conditional embedding information and the cross-attention map, a processed portrait picture corresponding to the original portrait picture, the processed portrait picture retaining the facial feature in the original portrait picture and containing the facial expression feature described by the description text.

2. The method according to claim 1, wherein the generating a cross-attention map corresponding to the original portrait picture according to the original portrait picture, the conditional embedding information, and a facial mask map comprises:

compressing the original portrait picture to obtain a latent space picture, the latent space picture being a picture having a dimension lower than a dimension of the original portrait picture and retaining the facial feature; and

generating the cross-attention map corresponding to the original portrait picture according to the latent space picture, the conditional embedding information, and the facial mask map; and

the obtaining, based on the conditional embedding information and the cross-attention map, a processed portrait picture corresponding to the original portrait picture comprises:

editing the latent space picture based on the conditional embedding information and the cross-attention map, to generate the processed portrait picture.

3. The method according to claim 2, wherein the editing the latent space picture based on the conditional embedding information and the cross-attention map to generate the processed portrait picture comprises:

adding a noise to the latent space picture for T times through a first neural network to obtain a noise picture, T being a positive integer;

performing noise prediction and denoising operation on the noise picture for T times through the first neural network according to the conditional embedding information and the cross-attention map to obtain a denoised picture; and

restoring the denoised picture to the dimension corresponding to the original portrait picture to generate the processed portrait picture.

4. The method according to claim 3, wherein the performing noise prediction and denoising operation on the noise picture for T times through the first neural network according to the conditional embedding information and the cross-attention map to obtain a denoised picture comprises:

predicting a noise added to the latent space picture through the first neural network for an $n^{th}$ time according to the conditional embedding information and the cross-attention map to obtain an $n^{th}$ predicted noise, an initial value of n being 1, and n being a positive integer less than or equal to T;

removing the $n^{th}$ predicted noise from a noisy picture to obtain an updated noisy picture, an initialized noisy picture being the noise picture;

determining, in response to that n is less than T, a value of n plus 1 as updated n, and repeating execution of the method from the operation of predicting the noise added to the latent space picture through the first neural network for the $n^{th}$ time according to the conditional embedding information and the cross-attention map to obtain $n^{th}$ predicted noise; and

determining, in response to that n is equal to T, the updated noisy picture as the denoised picture.

5. The method according to any one of claims 1 to 4, wherein the generating conditional embedding information based on an original portrait picture and description text comprises:

extracting the facial feature in the original portrait picture through a facial recognition model;

encoding the description text through a text model to obtain text embedding information; and

generating the conditional embedding information based on the facial feature and the text embedding information.

6. The method according to claim 5, wherein the description text comprises at least one token, and the text embedding information comprises embedding information respectively corresponding to the at least one token; and the generating the conditional embedding information based on the facial features and the text embedding information comprises:

concatenating embedding information corresponding to a first token in the at least one token with the facial feature to obtain updated embedding information corresponding to the first token, the first token referring to a preset token configured for representing a person;

processing the updated embedding information corresponding to the first token by using a multi-layer perceptron, MLP, to obtain final embedding information corresponding to the first token, the final embedding information corresponding to the first token and the embedding information corresponding to the first token having a same dimension; and

replacing the embedding information corresponding to the first token in the text embedding information with the final embedding information corresponding to the first token to generate the conditional embedding information.

7. The method according to claim 5, wherein the extracting the facial feature in the original portrait picture through a facial recognition model comprises:

cropping the facial region from the original portrait picture to obtain a facial picture corresponding to the original portrait picture; and

extracting the facial feature from the facial picture through the facial recognition model.

8. The method according to any one of claims 2 to 7, wherein the generating the cross-attention map corresponding to the original portrait picture according to the latent space picture, the conditional embedding information, and the facial mask map comprises:

generating an initial cross-attention map corresponding to the original portrait picture through the first neural network according to the latent space picture and the conditional embedding information; and

masking other regions in the initial cross-attention map than the facial region in the initial cross-attention map based on the facial mask map to obtain the cross-attention map corresponding to the original portrait picture.

9. A method for training a picture processing model, performed by a computer device, and comprising:

acquiring at least one training sample, each training sample comprising a sample portrait picture and sample description text that correspond to each other; the sample portrait picture being a picture containing a facial feature, and the sample description text being text configured for describing a facial expression feature in the sample portrait picture;

generating sample conditional embedding information through the picture processing model based on the sample portrait picture and the sample description text, the sample conditional embedding information comprising a feature of the sample portrait picture and a feature of the sample description text;

generating a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region;

obtaining, through the picture processing model based on the sample conditional embedding information and the cross-attention map, a processed sample portrait picture corresponding to the sample portrait picture; and

adjusting a parameter of the picture processing model based on the sample portrait picture and the processed sample portrait picture to obtain a trained picture processing model.

10. The method according to claim 9, wherein the generating a cross-attention map corresponding to the sample portrait picture through the picture processing model according to the sample portrait picture, the sample conditional embedding information, and a sample facial mask map comprises:

compressing the sample portrait picture through the picture processing model to obtain a sample latent space picture, the sample latent space picture being a picture having a dimension lower than a dimension of the sample portrait picture and retaining the facial feature; and

generating the cross-attention map corresponding to the sample portrait picture through the picture processing model according to the sample latent space picture, the sample conditional embedding information, and the sample facial mask map; and

the obtaining, through the picture processing model based on the sample conditional embedding information and the cross-attention map, a processed sample portrait picture corresponding to the sample portrait picture comprises:

editing the sample latent space picture through the picture processing model based on the sample conditional embedding information and the cross-attention map, to generate the processed sample portrait picture corresponding to the sample portrait picture.

11. The method according to claim 10, wherein the editing the sample latent space picture through the picture processing model based on the sample conditional embedding information and the cross-attention map to generate the processed sample portrait picture corresponding to the sample portrait picture comprises:

adding a noise to the sample latent space picture for T times through a first neural network comprised in the picture processing model to obtain a sample noise picture, T being a positive integer;

performing noise prediction and denoising operation on the sample noise picture for T times through the first neural network according to the conditional embedding information and the cross-attention map to obtain a sample denoised picture; and

restoring the sample denoised picture to the dimension corresponding to the sample portrait picture to generate the processed sample portrait picture.

12. The method according to claim 11, wherein the performing noise prediction and denoising operation on the sample noise picture for T times through the first neural network according to the conditional embedding information and the cross-attention map to obtain a sample denoised picture comprises:

predicting a noise added to the sample latent space picture through the first neural network for an $n^{th}$ time according to the sample conditional embedding information and the cross-attention map to obtain an $n^{th}$ predicted noise, an initial value of n being 1, and n being a positive integer less than or equal to T;

removing the $n^{th}$ predicted noise from a sample noisy picture to obtain an updated sample noisy picture, an initialized sample noisy picture being the sample noise picture;

determining, in response to that n is less than T, a value of n plus 1 as updated n, and repeating execution of the method from the operation of predicting the noise added to the sample latent space picture through the first neural network for the $n^{th}$ time according to the sample conditional embedding information and the cross-attention map to obtain the $n^{th}$ predicted noise; and

determining, in response to that n is equal to T, the updated sample noisy picture as the sample denoised picture.

13. The method according to any one of claims 9 to 12, wherein the generating sample conditional embedding information through the picture processing model based on the sample portrait picture and the sample description text comprises:

extracting the facial feature in the sample portrait picture through a facial recognition model;

encoding the sample description text through a text model comprised in the picture processing model to obtain sample text embedding information; and

generating the sample conditional embedding information based on the facial feature and the sample text embedding information.

14. The method according to claim 13, wherein the sample description text comprises at least one token, and the sample text embedding information comprises embedding information respectively corresponding to the at least one token; and

the generating the sample conditional embedding information based on the facial feature and the sample text embedding information comprises:

concatenating embedding information corresponding to a first token in the at least one token with the facial feature to obtain updated embedding information corresponding to the first token, the first token referring to a preset token configured for representing a person;

processing the updated embedding information corresponding to the first token by using a multi-layer perceptron, MLP, to obtain final embedding information corresponding to the first token, the final embedding information corresponding to the first token and the embedding information corresponding to the first token having a same dimension; and

replacing the embedding information corresponding to the first token in the sample text embedding information with the final embedding information corresponding to the first token to generate the sample conditional embedding information.

15. The method according to any one of claims 10 to 14, wherein the generating the cross-attention map corresponding to the sample portrait picture through the picture processing model according to the sample latent space picture, the sample conditional embedding information, and the sample facial mask map comprises:

> generating an initial cross-attention map corresponding to the sample portrait picture through the first neural network comprised in the picture processing model according to the sample latent space picture and the sample conditional embedding information; and
> masking other regions in the initial cross-attention map than the facial region in the initial cross-attention map based on the sample facial mask map to obtain the cross-attention map corresponding to the sample portrait picture.

16. The method according to any one of claims 9 to 15, wherein the adjusting a parameter of the picture processing model based on the sample portrait picture and the processed sample portrait picture to obtain a trained picture processing model comprises:

> determining a total loss based on the sample portrait picture and the processed sample portrait picture, the total loss comprising a noise loss, an identity loss, and a facial position loss, the noise loss indicating a difference between an added noise and a predicted noise, the identity loss indicating a difference between a feature representation of the sample portrait picture and a feature representation of the processed sample portrait picture in the facial region, and the facial position loss indicating a control ability of the cross-attention map in the facial region; and
> adjusting the parameter of the picture processing model according to the total loss to obtain the trained picture processing model.

17. The method according to claim 16, wherein the determining a total loss based on the sample portrait picture and the processed sample portrait picture comprises:

> determining the noise loss based on the noise added and the predicted noise in the process of editing the sample latent space picture;
> determining the identity loss based on the sample portrait picture and the processed sample portrait picture;
> determining the facial position loss based on the sample facial mask map and the cross-attention map; and
> determining the total loss according to the noise loss, the identity loss, and the facial position loss.

18. The method according to claim 17, wherein the determining the identity loss based on the sample portrait picture and the processed sample portrait picture comprises:

> extracting the facial feature of the sample portrait picture through the facial recognition model to obtain a first facial feature;
> extracting a facial feature of the processed sample portrait picture through the facial recognition model to obtain a second facial feature; and
> determining the identity loss based on a similarity between the first facial feature and the second facial feature.

19. A picture processing apparatus, deployed on a computer device, and comprising:

> an embedding module, configured to generate conditional embedding information based on an original portrait picture and description text, the conditional embedding information comprising a feature of the original portrait picture and a feature of the description text; the original portrait picture being a picture containing a facial feature, and the description text being text configured for describing a facial expression feature;
> an attention module, configured to generate a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression feature in the facial region; and
> an editing module, configured to obtain, based on the conditional embedding information and the cross-attention map, a processed portrait picture corresponding to the original portrait picture, the processed portrait picture retaining the facial feature in the original portrait picture and containing the facial expression feature described by the description text.

20. An apparatus for training a picture processing model, deployed on a computer device, and comprising:

a sample acquisition module, configured to acquire at least one training sample, each training sample comprising a sample portrait picture and sample description text that correspond to each other; the sample portrait picture being a picture containing a facial feature, and the sample description text being text configured for describing a facial expression feature in the sample portrait picture;

a sample embedding module, configured to generate sample conditional embedding information through the picture processing model based on the sample portrait picture and the sample description text, the sample conditional embedding information comprising a feature of the sample portrait picture and a feature of the sample description text;

a sample attention module, configured to generate a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region;

a sample editing module, configured to obtain, through the picture processing model based on the sample conditional embedding information and the cross-attention map, a processed sample portrait picture corresponding to the sample portrait picture; and

a model parameter adjustment module, configured to adjust a parameter of the picture processing model based on the sample portrait picture and the processed sample portrait picture to obtain a trained picture processing model.

21. A computer device, comprising a processor and a memory, the memory having a computer program stored therein, and the processor executing the computer program to implement the method according to any one of claims 1 to 8 or the method according to any one of claims 9 to 18.

22. A computer-readable storage medium, having a computer program stored therein, the computer program being configured to be executed by a processor to implement the method according to any one of claims 1 to 8 or the method according to any one of claims 9 to 18.

23. A computer program product, comprising a computer program, the computer program, when executed by a processor, implementing the method according to any one of claims 1 to 8 or the method according to any one of claims 9 to 18.

FIG. 1

| Generate conditional embedding information based on an original portrait picture and description text, the conditional embedding information including a feature of the original portrait picture and a feature of the description text; the original portrait picture being a picture containing a facial feature, and the description text being text configured for describing a facial expression feature | S210 |

| Generate a cross-attention map corresponding to the original portrait picture according to the original portrait picture, the conditional embedding information, and a facial mask map, the facial mask map being configured for distinguishing a facial region in the original portrait picture from other regions in the original portrait picture than the facial region, and the cross-attention map being configured for generating expression content corresponding to the facial expression feature in the facial region | S220 |

| Obtain, based on the conditional embedding information and the cross-attention map, a processed portrait picture corresponding to the original portrait picture, the processed portrait picture retaining the facial feature in the original portrait picture and containing the facial expression feature described by the description text | S230 |

## FIG. 2

Latent space picture    Conditional embedding information    Initial cross-attention map    Facial mask map    Cross-attention map

Q      K      M      F      A

## FIG. 3

41  42

<Start delimiter>          <One>          <Bear>          <End delimiter>

FIG. 4

Acquire at least one training sample, each training sample including a sample portrait picture and sample description text that correspond to each other; the sample portrait picture being a picture containing a facial feature, and the sample description text being text configured for describing a facial expression feature in the sample portrait picture — S510

Generate sample conditional embedding information through the picture processing model based on the sample portrait picture and the sample description text, the sample conditional embedding information including a feature of the sample portrait picture and a feature of the sample description text — S520

Generate a cross-attention map corresponding to the sample portrait picture through the picture processing model according to the sample portrait picture, the sample conditional embedding information, and a sample facial mask map, the sample facial mask map being configured for distinguishing a facial region in the sample portrait picture from other regions in the sample portrait picture than the facial region, and the cross-attention map being configured for generating expression content corresponding to the facial expression feature in the facial region — S530

Obtain, through the picture processing model based on the sample conditional embedding information and the cross-attention map, a processed sample portrait picture corresponding to the sample portrait picture — S540

Adjust a parameter of the picture processing model based on the sample portrait picture and the processed sample portrait picture to obtain a trained picture processing model — S550

FIG. 5

FIG. 6

FIG. 7

A man in the rain   Angry   Happy   Sad

Reference facial image

This method

Benchmark method 1

A woman in the wild   Angry   Happy   Sad

Reference facial image

This method

Benchmark method 1

## FIG. 8

Editing capability   Identity preservation capability

Identity preservation

Text consistency

t

## FIG. 9

FIG. 10

FIG. 11

1200

Embedding module
1210

Compression module
1220

Attention module 1230

Editing module 1240

FIG. 12

1300

Sample acquisition
module 1310

Sample embedding
module 1320

Sample compression
module 1330

Sample attention
module 1340

Sample editing module
1350

Model parameter
adjustment module 1360

FIG. 13

...

FIG. 14

## INTERNATIONAL SEARCH REPORT

| International application No. |
| --- |
| **PCT/CN2024/117932** |

| A. | CLASSIFICATION OF SUBJECT MATTER |
| --- | --- |

G06T11/60(2006.01)i

According to International Patent Classification (IPC) or to both national classification and IPC

| B. | FIELDS SEARCHED |
| --- | --- |

Minimum documentation searched (classification system followed by classification symbols)

IPC: G06T, G06V, G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 生成式, 生成模型, 肖像, 面部, 描述, 文本, 特征, 融合, 蒙版, 遮蔽, 掩码, 感兴趣区, 交叉注意力, 嵌入, 噪声, 去噪, image, generative, generative model, portrait, face, description, text, feature, fusion, matte, mask, ROI, region of interest, cross-attention, embedding, noise, de-noising

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117557686 A (TENCENT TECHNOLOGY (SHANGHAI) CO., LTD.) 13 February 2024 (2024-02-13) claims 1-16 | 1-23 |
| A | CN 113448477 A (NANCHANG HANGKONG UNIVERSITY et al.) 28 September 2021 (2021-09-28) description, paragraphs 0021-0063 | 1-23 |
| A | CN 116935166 A (GUANGDONG OPPO MOBILE TELECOMMUNICATIONS CORP., LTD.) 24 October 2023 (2023-10-24) entire document | 1-23 |
| A | CN 116958325 A (TENCENT TECHNOLOGY (SHENZHEN) CO., LTD.) 27 October 2023 (2023-10-27) entire document | 1-23 |
| A | CN 117037179 A (ANT BLOCKCHAIN TECHNOLOGY (SHANGHAI) CO., LTD.) 10 November 2023 (2023-11-10) entire document | 1-23 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2024** | **27 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/117932**

**C.    DOCUMENTS CONSIDERED TO BE RELEVANT**

| Category* | Citation of document, with indication, where appropriate, of the relevant passages | Relevant to claim No. |
|---|---|---|
| A | US 2023042683 A1 (INTERNATIONAL BUSINESS MACHINES CORP.) 09 February 2023 (2023-02-09) entire document | 1-23 |

**INTERNATIONAL SEARCH REPORT**
Information on patent family members

International application No.

**PCT/CN2024/117932**

| Patent document cited in search report | | | Publication date (day/month/year) | Patent family member(s) | | | Publication date (day/month/year) |
|---|---|---|---|---|---|---|---|
| CN | 117557686 | A | 13 February 2024 | None | | | |
| CN | 113448477 | A | 28 September 2021 | None | | | |
| CN | 116935166 | A | 24 October 2023 | None | | | |
| CN | 116958325 | A | 27 October 2023 | None | | | |
| CN | 117037179 | A | 10 November 2023 | None | | | |
| US | 2023042683 | A1 | 09 February 2023 | US | 11880664 | B2 | 23 January 2024 |

Form PCT/ISA/210 (patent family annex) (July 2022)

# EP 4 773 082 A1

**Patent documents cited in the description**

- CN 202311524401